# FASCICULE DE BREVET EUROPEEN

(11) **EP 1 399 451 B1**
(45) Date de publication et mention de la délivrance du brevet: **15.03.2006**
(21) Numéro de dépôt: 02748970.7
(22) Date de dépôt: 27.06.2002
(51) Int. Cl.: C07F 7/18, C08K 5/54, C08C 19/26, C08C 19/42

(54) **COMPOSES ORGANOSILICIQUES UTILISABLES COMME AGENT DE COUPLAGE**
ORGANOSILICIUMVERBINDUNGEN VERWENDBAR ALS HAFTVERMITTLER
ORGANOSILICON COMPOUNDS THAT CAN BE USED AS A COUPLING AGENT

(30) Priorité: 28.06.2001 FR 0108528
(43) Date de publication de la demande: 24.03.2004
(73) Titulaire: RHODIA CHIMIE, 92512 Boulogne Billancourt Cedex (FR)
(72) Inventeur: BARRUEL, Pierre, F-69340 Francheville (FR); GUENNOUNI, Nathalie, F-69540 Irigny (FR); KIRSCH, Gilbert, F-57140 Norroy Le Veneur (FR); MIGNANI, Gérard, F-69008 Lyon (FR)
(74) Mandataire: Trolliet, Maurice
(86) Numéro de dépôt international: PCT/FR2002/002229
(87) Numéro de publication internationale: WO 2003/002574

(56) Documents cités:
- EP-A- 0 074 632
- FR-A- 2 149 339

## Description

L'invention concerne de nouveaux composés organosiliciques, leurs procédés de préparation, leur utilisation comme agent de couplage charge blanche-élastomère dans les compositions de caoutchouc comprenant une charge blanche, notamment une matière siliceuse, à titre de charge renforçante. L'invention vise également les compositions de caoutchouc contenant un tel agent de couplage et les articles à base d'une de ces compositions.

Les agents de couplage de l'invention sont particulièrement utiles dans la préparation d'articles en élastomères soumis à des contraintes variées telles qu'une variation de température, une variation de sollicitation de fréquence importante en régime dynamique, une contrainte statique importante ou une fatigue en flexion importante en régime dynamique. Des exemples d'articles de ce type sont des bandes de convoyeur, des courroies de transmission de puissance, des tuyaux flexibles, des joints de dilatation, des joints d'appareils électroménagers, des supports jouant le rôle d'extracteurs de vibrations de moteurs soit avec des armatures métalliques, soit avec un fluide hydraulique à l'intérieur de l'élastomère, des câbles, des gaines de câbles, des semelles de chaussures et des galets pour téléphériques.

Des compositions d'élastomères appropriées à la préparation de tels articles doivent présenter les propriétés suivantes :
- des propriétés rhéologiques marquées par des viscosités les plus faibles possibles pour une grande facilité de mise en oeuvre des mélanges crus préparés, en particulier au niveau des opérations d'extrusion et de calandrage ;
- des temps de vulcanisation les plus courts possibles pour atteindre une excellente productivité de l'installation de vulcanisation ;
- d'excellentes propriétés de renforcement conférées par une charge, en particulier des valeurs optimales de module d'élasticité en traction, de résistance à la rupture en traction et de résistance à l'abrasion.

Pour atteindre un tel objectif, de nombreuses solutions ont été proposées qui se sont essentiellement concentrées sur l'utilisation d'élastomère(s) modifiés avec une charge renforçante. On sait, d'une manière générale, que pour obtenir les propriétés de renforcement optimales conférées par une charge, il convient que cette dernière soit présente dans la matrice élastomère sous une forme finale qui soit à la fois la plus finement divisée possible et répartie de la façon la plus homogène possible. Or, de telles conditions ne peuvent être réalisées que dans la mesure où la charge présente une très bonne aptitude d'une part à s'incorporer dans la matrice lors du mélange avec le (ou les) élastomère(s) et à se désagglomérer, et d'autre part, à se disperser de façon homogène dans la matrice élastomère.

De manière connue, le noir de carbone est une charge qui présente de telles aptitudes, mais ce n'est pas le cas en général pour les charges blanches. L'usage de charge blanche renforçante seule, notamment de silice renforçante seule, s'est révélé inapproprié en raison du faible niveau de certaines propriétés de telles compositions et par voie de conséquence de certaines propriétés des articles mettant en oeuvre ces compositions. Pour des raisons d'affinités réciproques, les particules de charge blanche, notamment de silice, ont une fâcheuse tendance, dans la matrice élastomère, à s'agglomérer entre elles. Ces interactions charge/charge ont pour conséquence néfaste de limiter la dispersion de la charge et donc de limiter les propriétés de renforcement à un niveau sensiblement inférieur à celui qu'il serait théoriquement possible d'atteindre si toutes les liaisons (charge blanche-élastomère) susceptibles d'être créées pendant l'opération de mélange, étaient effectivement obtenues. De surcroît, ces interactions tendent aussi à augmenter la viscosité à l'état cru des compositions élastomères, et donc à rendre leur mise en oeuvre plus difficile qu'en présence de noir de carbone.

Il est connu de l'homme de l'art qu'il est nécessaire d'utiliser un agent de couplage, encore appelé agent de liaison, qui a pour fonction d'assurer la connexion entre la surface des particules de charge blanche et l'élastomère, tout en facilitant la dispersion de cette charge blanche au sein de la matrice élastomérique.

Par agent de couplage (charge blanche-élastomère), on entend de manière connue un agent apte à établir une connexion suffisante, de nature chimique et/ou physique, entre la charge blanche et l'élastomère ; un tel agent de couplage, au moins bifonctionnel, a par exemple comme formule générale simplifiée « Y-B-X », dans laquelle:
- Y représente un groupe fonctionnel (fonction Y) qui est capable de se lier physiquement et/ou chimiquement à la charge blanche, une telle liaison pouvant être établie, par exemple, entre un atome de silicium de l'agent de couplage et les groupes hydroxyles (OH) de surface de la charge blanche (par exemple les silanols de surface lorsqu'il s'agit de silice) ;
- X représente un groupe fonctionnel (fonction X) capable de se lier physiquement et/ou chimiquement à l'élastomère, par exemple par l'intermédiaire d'un atome de soufre ;
- B représente un groupe organique divalent permettant de relier Y et X.

Les agents de couplage ne doivent en particulier pas être confondus avec de simples agents de recouvrement de charge blanche qui de manière connue peuvent comporter la fonction Y active vis-à-vis de la charge blanche mais sont dépourvus de la fonction X active vis-à-vis de l'élastomère.

Des agents de couplage, notamment silice-élastomère, ont été décrits dans un grand nombre de documents, les plus utilisés étant des alkoxysilanes bifonctionnels porteurs d'un groupe trialkoxy à titre de fonction Y et, à titre de fonction X, d'un groupe capable de réagir avec l'élastomère tel que notamment un groupe fonctionnel soufré.

Ainsi, il a été proposé dans la demande de brevet FR-A-2 094 859, d'utiliser un mercaptoalkoxysilane pour augmenter l'affinité de la silice avec la matrice élastomère. Il a été mis en évidence et il est aujourd'hui bien connu que les mercaptoalkoxysilanes, et en particulier le γ-mercaptopropyltriméthoxysilane, sont susceptibles de procurer d'excellentes propriétés de couplage silice-élastomère, mais que l'utilisation industrielle de ces agents de couplage n'est pas possible en raison de la forte réactivité du groupe -SH (fonction X) conduisant très rapidement au cours de la préparation de la composition d'élastomère(s) de type caoutchouc dans un mélangeur interne à des réactions de réticulation pendant le mélangeage, appelées encore "grillage" ("scorching"), à des viscosités élevées, en fin de compte à des compositions quasiment impossibles à travailler et à mettre en oeuvre industriellement. Pour illustrer cette impossibilité d'utiliser industriellement de tels agents de couplage et les compositions de caoutchouc les contenant, on peut citer les documents FR-A-2 206 330, US-A-4 002 594 et US-A-3 873 489.

Pour remédier à cet inconvénient, il a été proposé de remplacer ces mercaptoalkoxysilanes par des alkoxysilanes polysulfurés, notamment des polysulfures de bis-trialkoxyl(C₁-C₄)silylpropyle tels que décrits dans de nombreux brevets ou demandes de brevets (voir par exemple FR-A-2 149 339, FR-A-2 206 330, US-A-3 842 111, US-A-3 873 489, US-A-3 997 581). Parmi ces polysulfures, on citera notamment le tétrasulfure de bis 3-triéthoxysilylpropyle (en abrégé TESPT) qui est généralement considéré aujourd'hui comme le produit apportant, pour des vulcanisats chargés à la silice, le meilleur compromis en terme de sécurité au grillage, de facilité de mise en oeuvre et de pouvoir renforçant, mais dont l'inconvénient connu est d'être fort onéreux et de devoir être utilisé le plus souvent dans des quantités relativement importantes (voir par exemple brevets US-A-5 652 310, US-A-5 684 171, US-A-5 684 172).

Or, de manière inattendue, la Demanderesse a découvert lors de ses recherches que des agents de couplage spécifiques peuvent présenter des performances de couplages supérieures à celles des alkoxysilanes polysulfurés, notamment à celles du TESPT, dans les compositions de caoutchouc. Ces agents de couplage sont des composés organosiliciques comportant, par molécule, liés à des atomes de silicium, d'une part au moins un groupe hydroxyle ou un groupe monovalent hydrolysable (noté fonction Y) et d'autre part, et il s'agit là de l'une des caractéristiques essentielles des composés organosiliciques selon la présente invention, au moins un groupe fonctionnel polythiosulfénamide particulier (noté fonction X). Ces agents de couplage ne posent pas par ailleurs les problèmes précités de grillage prématuré et ceux de mise en oeuvre liés à une viscosité trop importante des compositions de caoutchouc à l'état cru, inconvénients posés notamment par les mercaptoalkoxysilanes.

### PREMIER OBJET DE L'INVENTION

En conséquence, un premier objet de l'invention concerne un nouveau composé organosilicique comportant, par molécule, liés à des atomes de silicium, d'une part au moins un groupe hydroxyle ou un groupe monovalent hydrolysable, et d'autre part une fonction X capable de ragir avec un élastomère caoutchouc, ledit composé organosilicique étant cractérisé en ce que la fonction X consiste dans au moins un groupe fonctionnel polythiosulfénamide de formule : 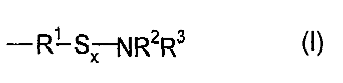
dans laquelle :
■ la valence libre est liée à un atome de silicium du composé organosilicique ;
■ le symbole R¹ représente un radical divalent choisi parmi : un groupe hydrocarboné aliphatique, saturé ou insaturé ; un groupe carbocyclique, saturé, insaturé ou/et aromatique, monocyclique ou polycyclique ; et un groupe présentant une partie hydrocarbonée aliphatique, saturée ou insaturée et une partie carbocyclique telle que définie ci-dessus ; ledit radical divalent étant éventuellement substitué ou interrompu par un atome d'oxygène et/ou un atome d'azote portant 1 à 2 groupes monovalents choisis parmi : un atome d'hydrogène ; un groupe hydrocarboné aliphatique, saturé ou insaturé ; un groupe carbocyclique, saturé, insaturé ou/et aromatique, monocyclique ou polycyclique ; et un groupe présentant une partie hydrocarbonée aliphatique, saturée ou insaturée et une partie carbocyclique telle que définie ci-dessus ;
■ x est un nombre entier ou fractionnaire, allant de 2 à 4 ;
■ l'un des substituants de l'atome d'azote, R² ou R³, représente : un atome d'hydrogène ; un groupe hydrocarboné aliphatique saturé ; un groupe carbocyclique saturé ou/et aromatique, monocyclique ou polycyclique ; un groupe présentant une partie hydrocarbonée aliphatique saturée et une partie carbocyclique saturée ou/et aromatique, monocyclique ou polycyclique ; ou le groupe de formule : 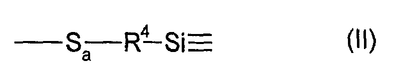
   dans laquelle :
   ■ a représente un nombre égal à 0 ou x ; quand a = x, les symboles x des formules (I) et (II) peuvent être alors identiques ou différents entre eux ;
   ■ le symbole R⁴ prend l'une quelconque des significations données ci-avant pour R¹, les symboles R¹ et R⁴ pouvant être identiques ou différents entre eux ;
   ■ le symbole Si≡ représente un atome de silicium du composé organosilicique, autre que celui auquel est liée la valence libre du radical R¹ de la formule (I) ;
■ l'autre substituant de l'atome d'azote, respectivement R³ ou R², représente le groupe de formule (II) tel que défini ci-avant, avec la condition selon laquelle le symbole Si≡ représente alors un atome de silicium du composé organosilicique qui, d'une part, est autre que celui auquel est liée la valence libre du radical R¹ de la formule (I) et, d'autre part, est autre encore que l'atome de silicium de l'autre groupe de formule (II) dans le cas où les deux substituants de l'atome d'azote, R² et R³, représentent l'un et l'autre un groupe de formule (II).

Dans le présent mémoire, on précisera que le symbole x de la formule (I) est un nombre, entier ou fractionnaire, qui représente le nombre d'atomes de soufre présents dans une molécule du groupe de formule (I). Ce nombre peut être un nombre exact d'atomes de soufre dans le cas où la voie de synthèse du groupe considéré ne peut donner naissance qu'à une seule sorte de groupe polysulfuré. Mais ce nombre peut être la moyenne du nombre d'atomes de soufre par molécule du groupe considéré, dans la mesure où la voie de synthèse choisie donne naissance à un mélange de groupes polysulfurés ayant chacun un nombre d'atomes de soufre différent ; dans ce cas, le groupe poythiosulfénamide synthétisé est en fait constitué d'une distribution de polysulfures, allant du disulfure S₂ à des polysulfures plus lourds, centrée sur une valeur moyenne en mole (valeur du symbole x) se situant dans le domaine général indiqué (x allant de 2 à 4).

Dans ce qui précède, par groupe hydrocarboné aliphatique, on entend un groupe linéaire ou ramifié, de préférence comprenant de 1 à 25 atomes de carbone, éventuellement substitué.

Avantageusement, ledit groupe hydrocarboné aliphatique comprend de 1 à 12 atomes de carbone, mieux de 1 à 8 atomes de carbone et mieux encore de 1 à 4 atomes de carbone.

A titre de groupe hydrocarboné aliphatique saturé, on peut citer les groupes alkyle, tels que les radicaux méthyle, éthyle, propyle, isopropyle, butyle, isobutyle, t-butyle, pentyle, isopentyle, néopentyle, 2-méthylbutyle, 1-éthylpropyle, hexyle, isohexyle, néohexyle, 1-méthylpentyle, 3-méthylpentyle, 1,1-diméthylbutyle, 1,3-diméthylbutyle, 2-éthylbutyle, 1-méthyl-1-éthylpropyle, heptyle, 1-méthylhexyle, 1-propylbutyle, 4,4-diméthylpentyle, octyle, 1-méthylheptyle, 2-éthylhexyle, 5,5-diméthylhexyle, nonyle, décyle, 1-méthylnonyle, 3,7-diméthyloctyle et 7,7-diméthyloctyle.

Les groupes hydrocarbonés aliphatiques insaturés comprennent une ou plusieurs insaturations, de préférence une, deux ou trois insaturations de type éthylénique (double liaison) ou/et acétylénique (triple liaison).

Des exemples en sont les groupes alcényle ou alcynyle dérivant des groupes alkyle définis ci-dessus par élimination de deux atomes d'hydrogène, ou plus. De manière préférée, les groupes hydrocarbonés aliphatiques insaturés comprennent une seule insaturation.

Dans le cadre de l'invention, on entend par groupe carbocyclique, un radical monocyclique ou polycyclique, éventuellement substitué, de préférence en C₃-C₅₀. De façon avantageuse, il s'agit d'un radical en C₃-C₁₈, de préférence mono-, bi- ou tricyclique. Lorsque le groupe carbocyclique comprend plus d'un noyau cyclique (cas des carbocycles polycycliques), les noyaux cycliques sont condensés deux à deux. Deux noyaux condensés peuvent être orthocondensés ou péricondensés.

Le groupe carbocyclique peut comprendre, sauf indications contraires, une partie saturée et/ou une partie aromatique et/ou une partie insaturée.

Des exemples de groupes carbocycliques saturés sont les groupes cycloalkyle. De manière préférée, les groupes cycloalkyle sont en C₃-C₁₈, mieux encore en C₅-C₁₀. On peut citer notamment les radicaux cyclopentyle, cyclohexyle, cycloheptyle, cyclooctyle, adamantyle ou norbornyle.

Le carbocycle insaturé ou toute partie insaturée de type carbocyclique présente une ou plusieurs insaturation éthyléniques, de préférence une, deux ou trois. Il présente avantageusement de 6 à 50 atomes de carbone, mieux encore de 6 à 20, par exemple de 6 à 18. Des exemples de carbocycles insaturés sont les groupes cycloalcényles en C₆-C₁₀.

Des exemples de radicaux carbocycliques aromatiques sont les groupes (C₆-C₁₈)aryle et notamment phényle, naphtyle, anthryle et phénanthryle.

Un groupe présentant à la fois une partie aliphatique hydrocarbonée telle que définie ci-dessus et une partie carbocyclique telle que définie ci-dessus est, par exemple, un groupe arylalkyle tel que benzyle, ou un groupe alkylaryle tel que tolyle.

Les substituants des groupes ou parties aliphatiques hydrocarbonés et des groupes ou parties carbocycliques sont, par exemple, des groupes alcoxy dans lesquels la partie alkyle est préférablement telle que définie ci-dessus.

Par groupe monovalent hydrolysable dont on a parlé supra à propos de la fonction Y, on entend un groupe qui, par hydrolyse, permet un rattachement à un atome de silicium et qu'il est possible de déplacer notamment par action d'eau.

De tels groupes sont, par exemple : les atomes d'halogène, notamment le chlore ; les groupes -O-G¹ et -O-CO-G¹ où G¹ représente : un groupe hydrocarboné aliphatique, saturé ou insaturé, ou un groupe carbocyclique, saturé, insaturé et/ou aromatique, monocyclique ou polycyclique, ou un groupe présentant une partie hydrocarbonée aliphatique, saturée ou insaturée et une partie carbocyclique telle que définie ci-dessus, G¹ pouvant être éventuellement halogéné et/ou substitué par un ou plusieurs alcoxy ; les groupes -O-N=CG⁵G⁶ dans lesquels G⁵ et G⁶ prennent indépendamment l'une quelconque des significations données ci-dessus pour G¹, G⁵ et G⁶ pouvant être halogénés ou/et éventuellement substitués par un ou plusieurs alcoxy ; les groupes -O-NG⁵G⁶ dans lesquels G⁵ et G⁶ sont tels que définis ci-dessus.

Avantageusement, pareil groupe monovalent hydrolysable est un radical : alcoxy, linéaire ou ramifié, en C₁-C₈ éventuellement halogéné ou/et éventuellement substitué par un ou plusieurs (C₁-C₈)alcoxy ; acyloxy en C₂-C₉ éventuellement halogéné ou éventuellement substitué par un ou plusieurs (C₁₋C₈)alcoxy ; cycloalkyloxy en C₅-C₁₀ ; ou aryloxy en C₆-C₁₈. A titre d'exemple, le groupe hydrolysable est méthoxy, éthoxy, n-propoxy, isopropoxy, n-butoxy, méthoxyméthoxy, éthoxyéthoxy, méthoxyéthoxy, β-chloropropoxy ou p-chloroéthoxy ou bien encore acétoxy.

Selon un premier mode, particulièrement adapté, de réalisation de l'invention, le groupe polythiosulfénamide répond à la formule (I) où au moins un des substituants de l'atome d'azote R² et R³ possède la formule (II) avec a = 0, c'est-à-dire, quand c'est R³ qui possède par exemple ladite formule (II) avec a = 0, répond à la formule : 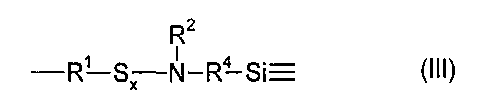
dans laquelle :
■ R¹ représente : une chaîne alkylène (par exemple en C₁-C₈) ; un groupe cycloalkylène saturé (par exemple en C₅-C₁₀) ; un groupe arylène (par exemple en C₆-C₁₈) ; ou un groupe divalent constitué d'une combinaison d'au moins deux de ces radicaux. Une signification de R¹ plus particulièrement adaptée est (C₁-C₈)alkylène, notamment (C₁-C₄)alkylène, par exemple méthylène, éthylène et mieux encore propylène ;
■ x est un nombre, entier ou fractionnaire, allant de 2 à 3. Une signification de x plus particulièrement adaptée est x = 2 ;
■ R² représente : un atome d'hydrogène ; un radical alkyle, linéaire ou ramifié, en C₁-C₈ un radical cycloalkyle en C₅-C₁₀ ; un radical aryle en C₆-C₁₈, un radical (C₆-C₁₈)aryl-(C₁-C₈)alkyle ; ou le groupe de formule (II) dans laquelle a = 0 et le symbole R⁴ possède les définitions larges mentionnées ci-après. De manière plus particulièrement adaptée, le symbole R² est choisi dans le groupe formé par l'hydrogène, les radicaux méthyle, éthyle, propyle, isopropyle, butyle, hexyle, cyclohexyle, phényle, benzyle, et les radicaux organosilyles de formule (II) dans laquelle a = 0 et R⁴ possède les définitions spécifiques mentionnées ci-après ;
■ le symbole R⁴ prend l'une quelconque des significations larges ou spécifiques données juste ci-avant pour R¹, les symboles R1 et R⁴ pouvant être identiques ou différents entre eux.

Selon un second mode, particulièrement adapté, de réalisation de l'invention, le groupe polythiosulfénamide répond à la formule (I) où un seul des substituants de l'azote, R² ou R³, possède la formule (II) avec a = x, c'est-à-dire, quand c'est R3 qui possède par exemple ladite formule (II) avec a = x, répond à la formule : 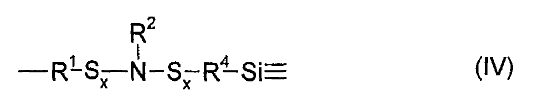
dans laquelle les symboles R¹, x, R² et R⁴ prennent l'une quelconque des significations larges ou spécifiques données ci-avant dans le "premier mode, particulièrement adapté, de réalisation de l'invention", avec la condition supplémentaire selon laquelle les symboles x de la formule donnée supra peuvent être identique ou différents entre eux.

Sans que cet autre mode de réalisation de l'invention soit limitatif, un groupe préféré de composés organosiliciques selon l'invention est constitué de composés organosiliciques polysilylés comportant, par molécule, d'une part au moins deux motifs silylés dont l'un au moins est porteur d'un, de deux ou de trois groupe(s) choisi(s) parmi un groupe hydroxyle et/ou un groupe monovalent hydrolysable relié à l'atome de silicium (fonction Y), et d'autre part un groupe fonctionnel polythiosulfénamide de formule (I) (fonction X) qui est reliée à l'atome de silicium de la fonction Y par la valence libre de R¹.

Dans ce groupe préféré, conviennent bien les composés organosiliciques polysilylés fonctionnels répondant à la formule générale : 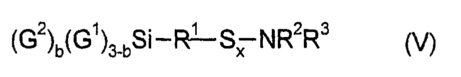
dans laquelle :
■ b représente un nombre choisi parmi 1, 2 et 3 ;
■ les symboles G¹, identiques ou différents, représentent chacun : un groupe hydrocarboné aliphatique, saturé ou insaturé ; un groupe carbocyclique, saturé, insaturé et/ou aromatique, monocyclique ou polycyclique ; ou un groupe présentant une partie hydrocarbonée aliphatique, saturée ou insaturée et une partie carbocyclique telle que définie ci-dessus ;
■ les symboles G², identiques ou différents, représentent chacun : un groupe hydroxyle ou un groupe monovalent hydrolysable ;
■ R¹, x, R² et R³ prennent l'une quelconque des significations générales données ci-avant à propos de la formule (I), avec la condition supplémentaire selon laquelle l'un des substituants R² ou R³ ou les deux substiuants R² et R³ représente(nt) alors un groupe silylé de formule : 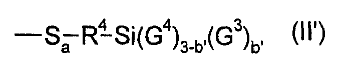
   dans laquelle :
   ■ a et R⁴ ont les significations générales données ci-avant à propos de la formule (II) ;
   ■ G³, G⁴ et b' ont, respectivement, les mêmes significations que G², G¹ et b données ci-avant dans la formule (V), les symboles G³, G⁴ et b' pouvant, respectivement, être identiques ou différents aux/des symboles G², G¹ et b.

Un premier sous-groupe de composés organosiliciques préférés, qui conviennent tout particulièrement bien, est constitué des composés organosiliciques polysilylés fonctionnels où, dans le groupe polythiosulfénamide, au moins un des substituants R² et R³ répond à la formule particulière (II') avec a = 0 ; de pareils composés, dans le cas où un seul substituant R³ par exemple répond à la formule particulière (II') avec a = 0, ont la formule : 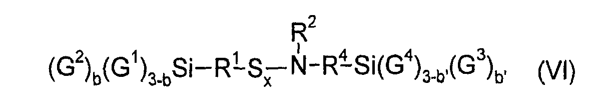
dans laquelle :
■ R¹, x, R² et R⁴ prennent l'une quelconque des significations larges ou spécifiques données supra dans le "premier mode, particulièrement adapté, de réalisation de l'invention" pour la formule (III) ;
■ b représente un nombre choisi parmi 1, 2 et 3 ;
■ les symboles G¹, identiques ou différents, représentent chacun : un radical alkyle, linéaire ou ramifié, en C₁-C₈ ; un radical cycloalkyle en C₅-C₁₀ ou un radical aryle en C₆-C₁₈. De manière plus spécifique, les symboles G¹ sont choisis dans le groupe formé par les radicaux méthyle, éthyle, propyle, isopropyle, cyclohexyle et phényle ;
■ les symboles G², identiques ou différents, représentent chacun : un radical alkoxy, linéaire ou ramifié, en C₁-C₈, éventuellement substitué par un ou plusieurs (C₁-C₈)alkoxy. De manière plus spécifique, les symboles G² sont choisis dans le groupe formé par les radicaux méthoxy, éthoxy, n-propoxy, isopropoxy, méthoxyméthoxy, éthoxyéthoxy et méthoxyéthoxy ;
■ G³, G⁴ et b' ont, respectivement, les mêmes définitions larges ou spécifiques que G², G¹ et b données juste supra, les symboles G³, G⁴ et b' pouvant, respectivement, être identiques ou différents aux/des symboles G², G¹ et b.

Comme composés organosiliciques de ce premier sous-groupe, on citera par exemple :
■ la N-(3'-triméthoxysilylpropyldithio)-3-triéthoxysilyl-propylamine : 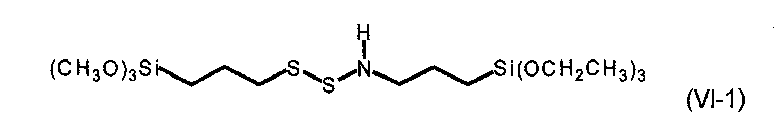
■ la N-(3'-triéthoxysilylpropyldithio)-3-triéthoxysilyl-propylamine : 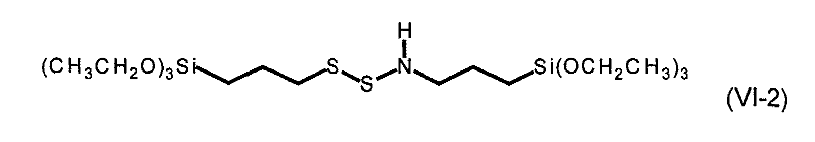
■ la N-méthyl-N-(3'-triéthoxysilylpropyldithio)-3'-triméthoxysilyl-propylamine

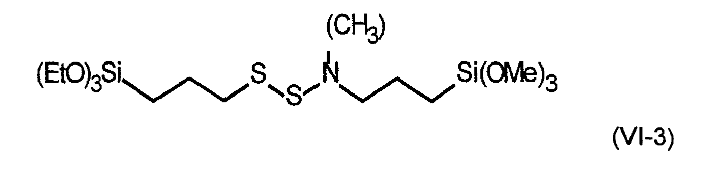

Un second sous-groupe de composés organosiliciques préférés, qui conviennent tout particulièrement bien, est constitué des composés organosiliciques polysilylés fonctionnels où, dans le groupe polythiosulfénamide, un seul des substituants R² ou R³ répond à la formule particulière (II') avec a = x ; de pareils composés, dans le cas où c'est le substituant R³ qui par exemple répond seul à la formule particulière (II') avec a = x, ont la formule : 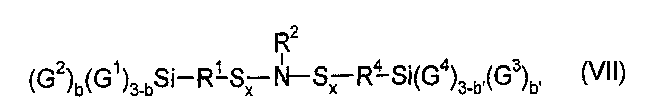
dans laquelle R¹, x, R², R⁴, b, G1, G2, G³, G⁴ et b' ont, respectivement, les mêmes définitions larges ou spécifiques que celles données supra dans la formule (VI), les symboles x pouvant être identiques ou différents entre eux, et les symboles R⁴, G³, G⁴ et b' pouvant, respectivement, être identiques ou différents aux/des symboles R¹, G², G¹ et b.

Comme composés organosiliciques de ce second sous-groupe, on citera par exemple :
■ la N,N-bis(3-triméthoxysilylpropyldithio)cyclohexylamine. 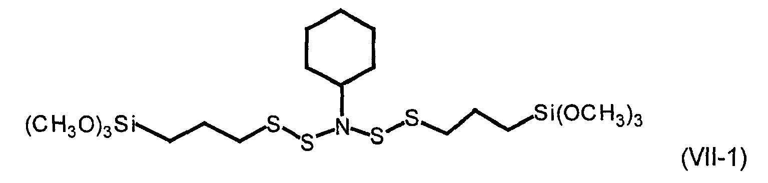
■ la N,N-bis(3-triéthoxysilylpropyldithio)cyclohexylamine. 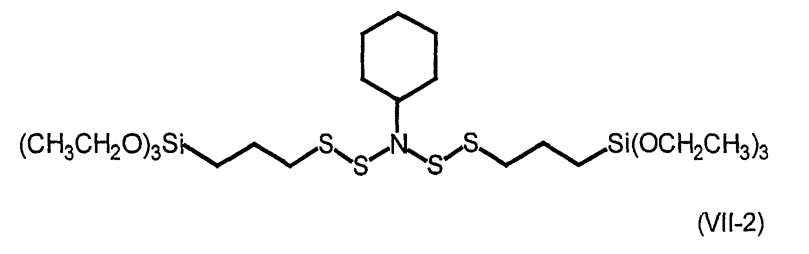
■ la N,N-bis(3-triméthoxysilylpropyldithio)-3-triéthoxysilylpropylamine

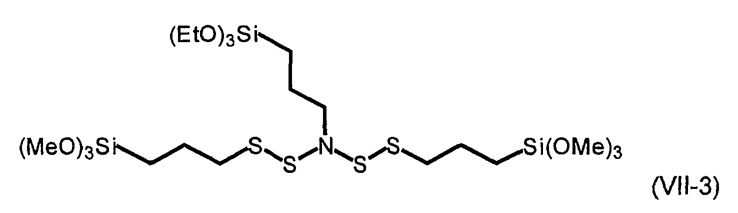

### SECOND OBJET DE L'INVENTION

Les composés organosiliciques de l'invention peuvent être préparés, et ceci constitue le second objet de la présente invention, par mise en oeuvre de l'une des méthodes suivantes ou de méthodes apparentées.

### Méthode A

Les composés polysilylés de formule (V), (VI) ou (VII) où x = 2 peuvent être obtenus par réaction d'un halogénure de disulfure de formule :

(G²)_{b}(G¹)_{3-b}Si-R¹-S-S-Hal (VIII)

dans laquelle G², G¹, b et R¹ sont tels que définis ci-dessus et Hal représente halogène, de préférence un atome de chlore, sur l'amine appropriée de formule :

HNR²R³ (IX)

dans laquelle R² et R³ sont tels que définis ci-dessus, en présence d'une base, de préférence une base organique.

Dans le cadre de l'invention, halogène représente brome, chlore, fluor ou iode.

Des bases appropriées sont, par exemple, la N-méthylmorpholine, la triéthylamine, la tributylamine, la diisopropyléthylamine, la dicyclohexylamine, la N-méthylpipéridine, la pyridine, la 4-(1-pyrrolidinyl)pyridine, la picoline, la 4-(N,N-diméthylamino)pyridine, la 2,6-di-t-butyl-4-méthylpyridine, la quinoléine, la N,N-diméthylaniline, la N,N-diéthylaniline, le 1,8-diazabicyclo[5.4.0]-undec-7-ène (DBU), le 1,5-diazabicyclo[4.3.0]non-5-ène (DBN) et le 1,4-diazabicyclo[2.2.2]-octane (DABCO ou triéthylènediamine).

La réaction est préférablement mise en oeuvre dans un solvant aprotique polaire tel qu'un éther et, par exemple, l'éther de diéthyle, l'éther de diisopropyle, le tétrahydrofuranne, le dioxanne, le diméthoxyéthane ou l'éther diméthylique de diéthylèneglycol. L'éther de diéthyle est préféré.

La température réactionnelle est fonction de la réactivité des molécules en présence et de la force de la base utilisée. Cette température varie généralement entre -78° C et la température ambiante (+15 à +25° C).

De façon avantageuse, une température comprise entre -78° C et -50° C convient.

Puis, il est souhaitable de laisser le milieu revenir à température ambiante.

Lorsque l'amine (IX) est une amine secondaire (R² ou R³ est distinct de H), la réaction est stoechiométrique. Dans ce cas, le rapport molaire de l'amine (IX) à l'halogénure de disulfure (VIII) est compris entre 1 et 2, mieux encore entre 1 et 1,5.

Lorsque l'amine (IX) est primaire (R² ou R³ est H), alors la quantité mise en jeu dépend de la nature du produit réactionnel visé. En vue d'obtenir un composé de formule (V), (VI) ou (VII) dans lequel R² ou R³ représente H, l'amine (IX) sera en excès dans le milieu réactionnel. Le rapport molaire (IX)/(VIII) varie généralement entre 1 et 3, ce rapport étant généralement le plus proche de 1, par exemple choisi entre 1 et 1,2. En vue d'obtenir un composé de formule (VII) dans lequel R² ou R³ représente le groupe :

-S-S-R⁴-Si(G⁴)_{3-b'}(G³)_{b'}

où R⁴, G⁴, b' et G³ sont respectivement identiques à R¹, G², b et G¹, le rapport molaire du composé (VIII) à l'amine (IX) sera supérieur ou égal à 2. Ce rapport molaire (VIII)/(IX) sera avantageusement compris entre 2 et 2,3. La quantité de base à utiliser pour cette réaction sera facilement déterminée par l'homme du métier, la base ayant pour rôle de piéger l'acide halohydrique libéré. Le rapport molaire de la base au composé de formule (VIII) est avantageusement supérieur ou égal à 1, par exemple compris entre 1 et 3.

### Méthode B

Les composés polysilylés de formule (V), (VI) ou (VII) où x = 2 peuvent être obtenus par ailleurs par réaction d'un disulfure de formule :

(G²)_{b}(G¹)_{3-b}Si-R¹-S-S-J (X)

dans laquelle G², G¹, b, et R¹ sont tels que définis ci-dessus et J représente le groupe succinimido ou phtalimido éventuellement substitué, sur l'amine (IX) définie ci-dessus, en présence d'une base, de préférence une base organique.

Les substituants des groupes phtalimido et succinimido sont des substituants organiques compatibles avec la réaction mise en jeu, c'est-à-dire non réactifs dans les conditions opératoires mises en oeuvre.

Les bases utilisables sont celles définies ci-dessus pour la méthode A.

De façon avantageuse, la réaction est mise en oeuvre dans un solvant polaire aprotique et, de préférence, un hydrocarbure halogéné aliphatique (tel que le chlorure de méthylène ou le tétrachlorure de carbone) ou un hydrocarbure aromatique éventuellement halogéné (tel qu'un benzène ou un toluène éventuellement halogéné).

De préférence, le solvant est CCl₄.

La température réactionnelle est préférablement comprise entre -10° C et +100° C, de préférence entre +10° C et +50° C.

Les quantités respectives des composés (IX) et (X) mises en présence dépendent du type de composé (V), (VI) ou (VII) visé, tout comme dans le cas précédent (méthode A).

On se rapportera donc à la méthode A pour la détermination des quantités molaires de (IX), (X) et de base à faire réagir.

### Méthode C

Les composés de formule (V), (VI) ou (VII) où x = 2 peuvent être obtenus par ailleurs par réaction d'un aminosulfure de formule :

J-S-NR²R³ (XI)

dans laquelle R², R³ et J sont tels que définis ci-dessus, avec un thiol de formule :

(G²)_{b}(G¹)_{3-b}Si-R¹-SH (XII)

dans laquelle G², G¹, b et R¹ sont tels que définis ci-dessus, en présence d'une base, la base étant préférablement telle que définie ci-dessus.

Pour cette réaction, la température réactionnelle varie avantageusement entre +10 et +40° C, plus préférablement entre +15 et +30° C, par exemple entre +18 et +25° C.

La réaction du composé (XII) sur le composé (XI) est généralement mise en oeuvre dans un solvant aprotique polaire tel que défini dans le cas de la méthode B.

De préférence, le solvant est le benzène ou le toluène.

La réaction du composé (XI) avec le composé (XII) est une réaction stoechiométrique. On préfère opérer en présence d'un léger excès du composé (XI). Ainsi, le rapport molaire de (XI) à (XII) sera généralement compris entre 1 et 1,5, mieux encore 1 et 1,3.

Cette variante peut être mise en oeuvre par exemple pour la préparation des composés de formule (V), (VI) ou (VII) dans lesquels R² ou R³ est distinct d'un atome d'hydrogène.

Les composés de formule (VIII) peuvent être préparés par réaction de dichlorure de soufre (SCl₂) sur un mercaptosilane approprié de formule (XII) tel que défini ci-dessus, en présence d'une base organique, et préférablement en présence de triéthylamine. Cette réaction est par exemple mise en oeuvre dans un éther à une température de -78 à -50° C. Les bases organiques et les éthers sont généralement tels que définis ci-dessus.

Les amines (IX) sont commerciales, ou facilement préparées à partir de produits commerciaux.

Les composés de formule (X) sont facilement préparés par réaction d'un thiol de formule (XII) tel que défini ci-dessus sur l'halogénure de formule :

J-S-Hal (XIII)

où J et Hal sont tels que définis ci-dessus.

Cette réaction est préférablement mise en oeuvre en présence d'une base, notamment une base organique, à une température de +10 à +50° C, par exemple de +15 à +30° C, notamment entre +18 et +25° C, dans un solvant aprotique polaire généralement tel que défini à la méthode B. De préférence, le solvant est le tétrachlorure de carbone, la base est la triéthylamine et la température est la température ambiante.

Cette réaction est stoechiométrique. Néanmoins, il est souhaitable d'opérer en présence d'un défaut de thiol (XII). Ainsi, le rapport molaire du composé J-S-Hal au composé (XII) est-il avantageusement compris entre 1 et 1,5, mieux encore entre 1 et 1,3.

Les composés de formule (XI) sont facilement obtenus par réaction d'une amine (IX) sur l'halogénure de formule :

J-S-Hal (XIII)

où J et Hal sont tels que définis ci-dessus, en présence d'une base organique. Cette réaction est préférablement mise en oeuvre dans un solvant de type hydrocarbure halogéné (et notamment le tétrachlorure de carbone) à une température généralement comprise entre +10 et +50° C, de préférence entre +15 et +30° C, par exemple entre +18 et +25° C (température ambiante). A titre de base organique, on optera pour l'une quelconque des bases définies ci-dessus et, par exemple, pour la triéthylamine. En variante, il est possible d'utiliser le réactif (IX) comme base. Dans ce cas de figure, on utilisera au moins deux équivalents d'amine (IX) pour 1 équivalent de l'halogénure (XIII).

Les composés de formule (XII) sont commerciaux ou facilement préparés à partir de composés commerciaux.

Le schéma 1 ci-dessous illustre une voie de synthèse du composé (XIII) :

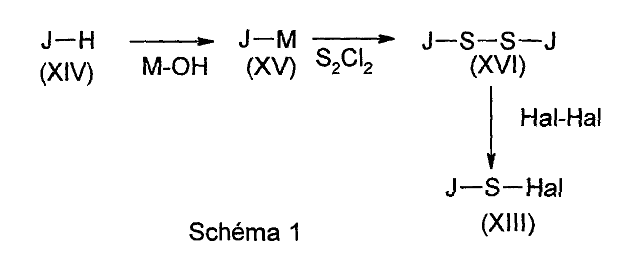

Dans ce schéma, J et Hal sont tels que définis ci-dessus et M représente un métal alcalin, de préférence Na ou K.

Le composé (XIV) commercial est transformé en sel de métal alcalin par action d'une base inorganique appropriée, M-OH où M est un métal alcalin, de type hydroxyde de métal alcalin dans un alcool inférieur en C₁-C₄ tel que le méthanol ou l'éthanol. Cette réaction a généralement lieu à une température de +15 à +25° C. Le sel résultant de formule (XV) est mis à réagir avec S₂Cl₂ pour conduire au composé (XVI). Les conditions réactionnelles avantageuses pour cette réaction sont un solvant aprotique polaire du type d'un hydrocarbure aliphatique halogéné (CH₂Cl₂, CCl₄) et une température comprise entre -20° C et +10° C. Puis, l'action de Hal-Hal sur le composé (XVI) conduit au composé (XIII) attendu. Dans cette dernière étape, on opère préférablement dans un solvant aprotique polaire de type hydrocarbure aliphatique halogéné (tel que le chloroforme ou le dichlorométhane) à une température comprise entre +15° C et la température de reflux du solvant, de préférence entre +40° C et+ 80° C, par exemple entre +50 et +70° C.

Selon un mode de réalisation préféré, Hal représente le chlore, auquel cas Hal-Hal est introduit sous forme gazeuse dans le milieu réactionnel.

### Méthode D

Les composés polysilylés de formule (V), (VI) ou (VII) où x = 3 peuvent être obtenus en enchaînant les étapes suivantes :
(1) réaction du thiol de formule (XII) avec S₂(Hal)₂ où Hal représente un atome d'halogène, et, de préférence de chlore, en présence d'une base, de préférence une base organique, pour donner :

   (G²)_{b}(G¹)_{3-b}Si-R¹-S-S-S-Hal (XVII)

   Cette réaction est par exemple mise en oeuvre dans un éther à une température de -78 à -50° C. Les bases organiques et les éthers sont généralement tels que définis ci-dessus dans la méthode A ; et
(2) réaction du composé (XVII) sur l'amine appropriée de formule (IX) en présence d'une base, de préférence une base organique ; pour plus de détails, on pourra se reporter au mode opératoire décrit supra à propos de la conduite de la méthode A.

### Méthode E

Les composés polysilylés de formule (V), (VI) ou (VII) où x = 4 peuvent être obtenus en enchaînant les étapes suivantes :
(1) réaction de l'halogénure de disulfure de formule (VIII) ou de l'halogénure de trisulfure de formule (XVII) avec la quantité requise de soufre élémentaire [apport de 2 atomes de soufre dans le cas du composé (VIII) ou apport de 1 atomes de soufre dans le cas du composé (XVII)], en opérant à une température allant de +70 °C à +170 °C, en présence éventuellement d'un solvant aromatique, pour donner le composé de formule :

   (G²)_{b}(G¹)_{3-b}Si-R¹-S-S-S-S-Hal (XVIII)
(2) réaction du composé de formule (XVIII) sur l'amine appropriée de formule (IX) en présence d'une base, de préférence une base organique ; pour plus de détails, on pourra se reporter au mode opératoire décrit supra à propos de la conduite de la méthode A.

### TROISIEME OBJET DE L'INVENTION

Selon un autre de ses objets, la présente invention concerne l'utilisation d'une quantité efficace d'au moins un composé organosilicique porteur de groupe(s) de formule (I) à fonction polythiosulfénamide, comme agent de couplage charge blanche-élastomère dans les compositions comprenant au moins un élastomère diénique et une charge blanche à titre de charge renforçante, lesdites compositions étant destinées à la fabrication d'articles en élastomère(s) diénique(s).

Comme agents de couplage qui sont particulièrement adaptés à l'utilisation visée, on citera les composés organosiliciques porteurs chacun de groupe(s) de formule (III) ayant la définition donnée supra dans le cadre du "premier mode, particulièrement adapté, de réalisation de l'invention".

Comme autres agents de couplage qui sont particulièrement adaptés à l'utilisation visée, on citera encore les composés organosiliciques porteurs chacun de groupe(s) de formule (IV) ayant la définition donnée supra dans le cadre du "second mode, particulièrement adapté, de réalisation de l'invention".

Les agents de couplage qui sont préférentiellement utilisés et qui conviennent bien consistent dans les composés organosiliciques polysilylés fonctionnels répondant à la formule (V) définie ci-avant.

Comme agents de couplage de ce type qui conviennent tout particulièrement bien, on citera les composés organosiliciques polysilylés fonctionnels répondant à la formule (VI) ayant la définition donnée supra dans le cadre du "premier sous-groupe de composés organosiliciques préférés".

Comme autres agents de couplage de ce type qui conviennent tout particulièrement bien, on citera encore les composés organosiliciques polysilylés fonctionnels répondant à la formule (VII) ayant la définition donnée supra dans le cadre du "second sous-groupe de composés organosiliciques préférés".

### QUATRIEME OBJET DE L'INVENTION

Dans le cadre de cette application agent de couplage, la présente invention concerne encore, dans un quatrième objet, les compositions d'élastomère(s) diénique(s) comprenant une charge blanche renforçante obtenues grâce à l'emploi d'une quantité efficace (i) d'au moins un composé organosilicique porteur de groupe(s) de formule (I), (III) ou (IV) à fonction polythiosulfénamide, ou (2i), en particulier, d'au moins un composé organosilicique polysilylé fonctionnel répondant à la formule (V), (VI) ou (VII).

Plus précisément, ces compositions comprennent (les parties sont données en poids) :
- pour 100 parties d'élastomère(s) diénique(s),
- 10 à 200 parties de charge blanche renforçante, de préférence 20 à 150 et plus préférentiellement encore 30 à 100 parties,
- 1 à 20 parties, de préférence 2 à 20 parties et plus préférentiellement encore 2 à 12 parties d'agent(s) de couplage.

De manière avantageuse, la quantité d'agent(s) de couplage, choisie dans les zones générales et préférentielles précitées, est déterminée de manière à ce qu'elle représente de 0,5 % à 20 %, de préférence de 1 % à 15 %, et plus préférentiellement de 1 % à 10 % par rapport au poids de la charge blanche renforçante.

L'homme de métier comprendra que l'agent de couplage pourrait être préalablement greffé sur la charge blanche renforçante (via sa fonction Y), la charge blanche ainsi "précouplée" pouvant ensuite être liée à l'élastomère diénique par l'intermédiaire de la fonction libre X.

Dans le présent mémoire, on entend définir par l'expression "charge blanche renforçante", une charge "blanche" (c'est à dire inorganique ou minérale), parfois appelée charge "claire", capable de renforcer à elle seule, sans autre moyen que celui d'un agent de couplage, une composition d'élastomère(s) de type caoutchouc, naturel(s) ou synthétique(s).

L'état physique sous lequel se présente la charge blanche renforçante est indifférent, c'est-à-dire que ladite charge peut se présenter sous forme de poudre, de microperles, de granulés ou de billes.

De manière préférentielle, la charge blanche renforçante consiste dans la silice, l'alumine ou un mélange de ces deux espèces.

De manière plus préférentielle, la charge blanche renforçante consiste dans la silice, prise seule ou en mélange avec de l'alumine.

A titre de silice susceptible d'être mise en oeuvre dans l'invention conviennent toutes les silices précipitées ou pyrogénées connues de l'homme de l'art présentant une surface spécifique BET ≤ à 450 m²/g. On préfère les silices de précipitation, celles-ci pouvant être classiques ou hautement dispersibles.

Par silice hautement dispersible, on entend toute silice ayant une aptitude à la désagglomération et à la dispersion dans une matrice polymérique très importante observable par microscopie électronique ou optique, sur coupes fines. Comme exemples non limitatifs de silices hautement dispersibles on peut citer celles ayant une surface spécifique CTAB égale ou inférieure à 450 m²/g, allant de préférence de 30 à 400 m²/g, et particulièrement celles décrites dans le brevet US-A-5 403 570 et les demandes de brevets WO-A-95/09127 et WO-A-95/09128 dont le contenu est incorporé ici. Comme exemples non limitatifs de telles silices hautement dispersibles préférentielles, on peut citer la silice Perkasil KS 430 de la société AKZO, la silice BV3380 de la société DEGUSSA, les silices Zeosil 1165 MP et 1115 MP de la société RHODIA, la silice Hi-Sil 2000 de la société PPG, les silices Zeopol 8741 ou 8745 de la société HUBER. Conviennent aussi les silices précipitées traitées telles que par exemple les silices "dopées" à l'aluminium décrite dans la demande de brevet EP-A-0 735 088 dont le contenu est également incorporé ici.

A titre plus préférentiel, conviennent bien les silices de précipitation ayant :
- une surface spécifique CTAB allant de 100 à 240 m²/g, de préférence de 100 à 180 m²/g,
- une surface spécifique BET allant de 100 à 250 m²/g, de préférence de 100 à 190m²/g,
- une prise d'huile DOP inférieure à 300ml/100 g, de préférence allant de 200 à 295 ml/100 g,
- un rapport spécifique BET/surface spécifique CTAB allant de 1,0 à 1,6.

Bien entendu par silice, on entend également des coupages de différentes silices. La surface spécifique CTAB est déterminée selon la méthode NFT 45007 de novembre 1987. La surface spécifique BET est déterminée selon la méthode de BRUNAUER, EMMETT, TELLER décrite dans "The Journal of the American Chemical Society, vol. 60, page 309 (1938)" correspondant à la norme NFT 45007 de novembre 1987. La prise d'huile DOP est déterminée selon la norme NFT 30-022 (mars 1953) en mettant en oeuvre le dioctylphtalate.

A titre d'alumine renforçante, on utilise avantageusement une alumine hautement dispersible ayant :
- une surface spécifique BET allant de 30 à 400 m²/g, de préférence de 60 à 250 m²/g,
- une taille moyenne de particules au plus égale à 500 nm, de préférence au plus égale à 200 nm, et
- un taux élevé de fonctions réactives de surface Al-OH,

telle que décrite dans le document EP-A-0 810 258.

Comme exemples non limitatifs de pareilles alumines renforçantes, on citera notamment les alumines A125, CR125, D65CR de la société BAÏKOWSKI.

Par élastomères diéniques susceptibles d'être mis en oeuvre pour les compositions conformes au quatrième objet de l'invention, on entend plus précisément :
(1) les homopolymères obtenus par polymérisation d'un monomère diène conjugué ayant de 4 à 22 atomes de carbone, comme par exemple : le butadiène-1,3, le méthyl-2 butadiène-1,3, le diméthyl-2,3 butadiène-1,3, le diéthyl-2,3 butadiène-1,3, le méthyl-2 éthyl-3 butadiène-1,3, le chloro-2 butadiène-1,3, le méthyl-2 isopropyl-3 butadiène-1,3, le phényl-1 butadiène-1,3, le pentadiène-1,3, l'hexadiène-2,4 ;
(2) les copolymères obtenus par copolymérisation d'au moins deux des diènes conjugués précités entre eux ou par copolymérisation d'un ou plusieurs des diènes conjugués précités avec un ou plusieurs monomères insaturés éthyléniquement choisis parmi :
   - les monomères vinyles aromatiques ayant de 8 à 20 atomes de carbone, comme par exemple : le styrène, l'ortho-, méta- ou paraméthylstyrène, le mélange commercial "vinyl-toluène", le paratertiobutylstyrène, les méthoxystyrènes, les chlorostyrènes, le vinylmésitylène, le divinylbenzène, le vinylnaphtalène ;
   - les monomères nitriles vinyliques ayant de 3 à 12 atomes de carbone, comme par exemple l'acrylonitrile, le méthacrylonitrile ;
   - les monomères esters acryliques dérivés de l'acide acrylique ou de l'acide méthacrylique avec des alcanols ayant de 1 à 12 atomes de carbone, comme par exemple l'acrylate de méthyle, l'acrylate d'éthyle, l'acrylate de propyle, l'acrylate de n-butyle, l'acrylate d'isobutyle, l'acrylate d'éthyl-2 hexyle, le méthacrylate de méthyle, le méthacrylate d'éthyle, le méthacrylate de n-butyle, le méthacrylate d'isobutyle ;

   les copolymères peuvent contenir entre 99 % et 20 % en poids d'unités diéniques et entre 1 % et 80 % en poids d'unités vinyles aromatiques, nitriles vinyliques et/ou esters acryliques ;
(3) les copolymères ternaires obtenus par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène (élastomère EPDM) ;
(4) le caoutchouc naturel ;
(5) les copolymères obtenus par copolymérisation d'isobutène et d'isoprène (caoutchouc butyle), ainsi que les versions halogénées, en particulier chlorées ou bromée, de ces copolymères ;
(6) un mélange de plusieurs des élastomères précités (1) à (5) entre eux.

A titre préférentiel, on fait appel à un ou plusieurs élastomère(s) choisi(s) parmi : (1) le polybutadiène, le polychloroprène, le polyisoprène [ou poly(méthyl-2 butadiène-1,3)] ; (2) le poly(isoprène-butadiène), le poly(isoprène-styrène), le poly(isoprène-butadiène-styrène), le poly(butadiène-styrène), le poly(butadiène-acrylonitrile) ; (4) le caoutchouc naturel ; (5) le caoutchouc butyle ; (6) un mélange des élastomères nommément précités (1), (2), (4), (5) entre eux ; (6') un mélange contenant une quantité majoritaire (allant de 51 % à 99,5 % et, de préférence, de 70 % à 99 % en poids) de polyisoprène (1) et/ou de caoutchouc naturel (4) et une quantité minoritaire (allant de 49 % à 0,5 % et, de préférence, de 30 % à 1 % en poids) de polybutadiène, de polychloroprène, de poly(butadiène-styrène) et/ou de poly(butadiène-acrylonitrile).

Les compositions conformes à l'invention contiennent en outre tout ou partie des autres constituants et additifs auxiliaires habituellement utilisés dans le domaine des compositions d'élastomère(s) et de caoutchouc(s).

Ainsi, on peut mettre en oeuvre tout ou partie des autres constituants et additifs suivants :
- s'agissant du système de vulcanisation, on citera par exemple :
   - des agents de vulcanisation choisis parmi le soufre ou des composés donneurs de soufre, comme par exemple des dérivés de thiurame ;
   - des accélérateurs de vulcanisation, comme par exemple des dérivés de guanidine ou des dérivés de thiazoles ;
   - des activateurs de vulcanisation comme, par exemple l'oxyde de zinc, l'acide stérarique et le stéarate de zinc ;
- s'agissant d'autre(s) additif(s), on citera par exemple :
   - une charge renforçante conventionnelle consistant dans le noir de carbone ; comme noirs de carbone conviennent tous les noirs de carbone, notamment les noirs du type HAF, ISAF, SAF ; à titre d'exemples non limitatifs de tels noirs, on peut citer les noirs N115, N134, N234, N339, N347, N375 ; la quantité de noir de carbone est déterminée de manière à ce que d'une part la charge blanche renforçante mise en oeuvre représente plus de 50 % du poids de l'ensemble charge blanche + noir de carbone, et d'autre part la quantité de charge renforçante totale (charge blanche + noir de carbone) reste dans les intervalles de valeurs indiqués supra, pour la charge blanche renforçante, à propos de la constitution pondérale des compositions ;
   - une charge blanche conventionnelle peu ou non renforçante comme par exemple des argiles, la bentonite, le talc, la craie, le kaolin, le dioxyde de titane ou un mélange de ces espèces ;
   - des agents antioxydants ;
   - des agents antiozonants, comme par exemple la N-phényl-N'-(diméthyl-1,3 butyl)-p-phénylène-diamine ;
   - des agents de plastification et des agents d'aide à la mise en oeuvre.

S'agissant des agents d'aide à la mise en oeuvre, les compositions conformes à l'invention peuvent contenir des agents de recouvrement de la charge renforçante, comportant par exemple la seule fonction Y, susceptibles de manière connue, grâce à une amélioration de la dispersion de la charge dans la matrice de caoutchouc et à un abaissement de la viscosité des compositions, d'améliorer la faculté de mise en oeuvre des compositions à l'état cru. Pareils agents consistent par exemple dans des alkylakoxysilanes (notamment des alkyltriéthoxysilanes), des polyols, des polyéthers (par exemple des polyéthylèneglycols), des amines primaires, secondaires ou tertiaires (par exemple des trialcanol-amines), et des polydiméthylsiloxanes α,ω-dihydroxylés. Un pareil agent d'aide à la mise en oeuvre, quand on en utilise un, est employé à raison de 1 à 10 parties en poids, et de préférence 2 à 8 parties, pour 100 parties de charge blanche renforçante.

Le procédé de préparation des compositions d'élastomère(s) diénique(s) comprenant une charge blanche renforçante et au moins un agent de couplage peut se faire selon un mode opératoire classique en une ou deux étapes.

Selon le procédé en une étape, on introduit et malaxe dans un mélangeur interne usuel, par exemple de type BANBURY ou de type BRABENDER, tous les constituants nécessaires à l'exception du (ou des) agent(s) de vulcanisation et éventuellement : du (ou des) accélérateurs de vulcanisation et/ou du (ou des) activateur(s) de vulcanisation. Le résultat de cette première étape de mélange est repris ensuite sur un mélangeur externe, généralement un mélangeur à cylindres, et on y ajoute alors le (ou les) agent(s) de vulcanisation et éventuellement : le (ou les) accélérateur(s) de vulcanisation et/ou le (ou les) activateur(s) de vulcanisation.

Il peut être avantageux pour la préparation de certains articles de mettre en oeuvre un procédé en deux étapes conduites toutes les deux dans un mélangeur interne. Dans la première étape, sont introduits et malaxés tous les constituants nécessaires à l'exception du (ou des) agent(s) de vulcanisation et éventuellement : du (ou des) accélérateur(s) de vulcanisation et/ou du (ou des) activateurs de vulcanisation. Le but de la seconde étape qui suit est essentiellement de faire subir au mélange un traitement thermique complémentaire. Le résultat de cette seconde étape est repris également ensuite sur un mélangeur externe pour y ajouter le (ou les) agent(s) de vulcanisation et éventuellement : le (ou les) accélérateur(s) de vulcanisation, et/ou le (ou les) activateurs de vulcanisation.

La phase de travail en mélangeur interne est opérée généralement à une température allant de +80°C à +200°C, de préférence de +80°C à +180°C. Cette première phase de travail est suivie de la seconde phase de travail en mélangeur externe en opérant à une température plus basse, généralement inférieure à +120°C et de préférence allant de +20°C à +80°C.

La composition finale obtenue est ensuite calandrée par exemple sous la forme d'une feuille, d'une plaque ou encore d'un profilé utilisable pour la fabrication d'articles en élastomère(s).

La vulcanisation (ou cuisson) est conduite de manière connue à une température allant généralement de +130°C à +200°C, éventuellement sous pression, pendant un temps suffisant qui peut varier par exemple entre 5 et 90 minutes en fonction notamment de la température de cuisson, du système de vulcanisation adopté et de la cinétique de vulcanisation de la composition considérée.

Il va de soi que la présente invention, prise dans son quatrième objet, concerne les compositions d'élastomère(s) précédemment décrites tant à l'état cru (i.e., avant cuisson) qu'à l'état cuit (i.e., après réticulation ou vulcanisation).

### CINQUIEME OBJET DE L'INVENTION

Les compositions d'élastomère(s) vont servir à préparer des articles en élastomère(s) possédant un corps comprenant lesdites compositions décrites ci-avant dans le cadre du quatrième objet de l'invention. Ces compositions sont particulièrement utiles pour préparer des articles consistant dans des supports de moteurs, des semelles de chaussures, des galets de téléphérique, des joints d'appareillages électroménagers et des gaines de câbles.

Les exemples suivants illustrent la présente invention.

### I - Exemples de préparation des agents de couplage

Les points de fusion (Pf) exprimés en degré Celsius (° C) sont déterminés par projection sur un banc KOFFLER, préalablement étalonné (ΔT = ±2°C).

Les points d'ébullition (Ebₚᵣₑₛₛᵢₒₙ) sont donnés en millibars (mbar).

Les spectres 250 MHz du proton (RMN¹H) et du carbone (RMN¹³C) sont enregistrés sur un spectromètre BRUCKER AC 250.

Les déplacements chimiques (δc et δh) sont exprimés en partie par million (ppm) par rapport au deutériochloroforme (CDCl₃).

Les constantes de couplage notées J sont exprimées en Hz.

Les abréviations suivantes sont utilisées : s, *singulet ;* sl, *singulet large ;* d, *doublet ;* t, *triplet;* q, *quadruplet ;* m, *multiplet.*

Toutes les manipulations avec les composés organosiliciques polysilylés comprenant des restes alkoxysilanes sont faites sous atmosphère inerte et dans des conditions anhydres.

### EXEMPLE 1

### N-(3'-triméthoxysilylpropyldithio)-3-triéthoxysilyl-propylamine

Dans un tricol de deux litres sous atmosphère d'argon, une solution de (100 mmol ; 10,3 g) de dichlorure de soufre dans 400 ml d'éther diéthylique anhydre est refroidie à -78° C. Sous agitation mécanique, un mélange de 3-mercaptopropyltriméthoxysilane (100 mmol) et de triéthylamine (100 mmol ; 10,2 g) dans 150 ml d'éther diéthylique anhydre est ajouté goutte à goutte en une heure. Le milieu réactionnel est agité à cette température pendant une heure puis un mélange de 3-(triéthoxysilyl)-propylamine (110 mmol) et de triéthylamine (100 mmol ; 10,2 g) dans 100 ml d'éther diéthylique anhydre est additionné goutte à goutte en une heure.

On laisse revenir le milieu réactionnel à température ambiante puis on filtre le chlorhydrate de triéthylamine et on concentre sous pression réduite. Une distillation sous pression réduite permet d'éliminer les traces de réactifs n'ayant pas réagi.

Le composé obtenu a pour formule : 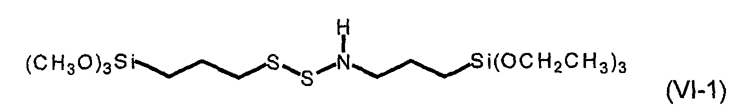
Rendement : 75%
Aspect : huile jaune
RMN ¹H (CDCl₃) δ_{H}
0,62 (t, 2H, Si-CH₂) ; 0,74 (t, 2H, Si-CH₂) ; 1,21 (t, 9H, CH₃-CH₂-O); 1,69 (m, 2H, CH₂) ; 1,82(m, 2H, CH₂) ; 2,88 (t, 2H, SCH₂) ; 3,07 (t, 2H, NCH₂) 3,55 (s, 9H, O-CH₃) ; 3,81 (q, 6H, -OCH₂).
RMN ¹³C (CDCl₃) δ_{C}
6,2 (Si-CH₂) ; 9,7 (Si-CH₂) ; 18,4 (CH₃-CH₂) ; 20,9 (CH₂) ; 23,8 (CH₂); 44,0 (S-CH₂) ; 50,6 (-OCH₃) ; 54,9 (N-CH₂) ; 58,5 (-OCH₂).

On a donc préparé un agent de couplage organoxysilane de formule (VI) dans laquelle :
- G³ =CH₃O
- b' = b = 3
- R¹ = R⁴ = propylène
- R² = H
- R³ = -R⁴-Si(G¹)_{3-b}(G²)_{b}
- G² = OCH₂CH₃.

### EXEMPLE 2

### N-(3'-triéthoxysilylpropyldithio)-3-triéthoxysilyl-propylamine

Par mise en oeuvre d'un protocole opératoire identique à celui de l'exemple 1 mais en remplaçant le 3-mercaptopropyltriméthoxysilane par le 3-mercaptopropyltriéthoxysilane, on obtient le composé de formule : 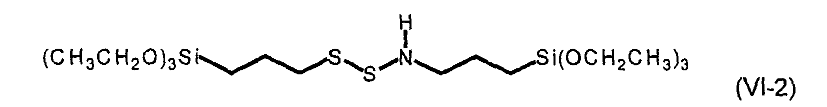
Rendement: 86%
Aspect : huile jaune
RMN ¹H (CDCl₃) δ_{H}
0,61 (t, 2H, Si-CH₂) ; 0,72 (t, 2H, Si-CH₂) ; 1,21 (m, 18H, CH₃-CH₂-O) ; 1,69 (2, 2H, CH₂) ; 1,83(m, 2H, CH₂) ; 2,89 (t, 2H, S-CH₂) ; 3,05 (t, 2H, N-CH₂); 3,81 (m, 12H, -OCH₂).
RMN ¹³C (CDCl₃) δ_{c}
6,2 (Si-CH₂) ; 9,7 (Si-CH₂) ; 18,3 (CH₃-CH₂) ; 18,4 (CH₃-CH₂) ; 20,9 (CH₂) ; 23,8 (CH₂) ; 44,0 (S-CH₂) ; 54,9 (N-CH₂) ; 58,5 (-OCH₂) ; 58,6 (-OCH₂).

### EXEMPLE 3

### N,N-bis(3-triméthoxysilylpropyldithio)cyclohexylamine.

Par mise en oeuvre du protocole opératoire de l'exemple 1 mais en remplaçant la 3-(triéthoxysilyl)-propylamine par la cyclohexylamine et en utilisant 55 mmoles de cyclohexylamine, on obtient le composé de formule: 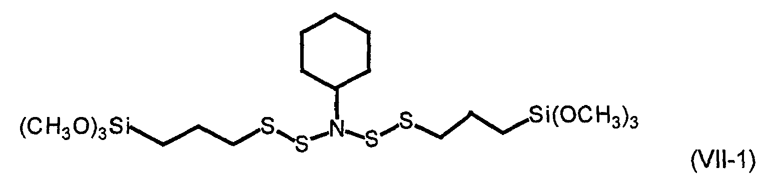
Rendement : 85%
Aspect : huile orange
RMN ¹H (CDCl₃) δ_{H}
0,73 (m, 4H, Si-CH₂) ; 1,22 (m, 2H, CH₂) ; 1,64-1,92 (m, 8H, CH₂) ; 2,25 (m, 2H, CH₂) ; 2,40 (m, 2H, CH₂); 2,88 (m, 4H, SCH₂); 3,01 (m, 1H, NCH);
3,56 (s, 18H, -OCH₃).
RMN ¹³C (CDCl₃) δ_{c}
8,3 (2xSi-CH₂) ; 22,3 (2xCH₂) ; 26,5 (CH₂) ; 25,9 (2 x CH₂) ; 32,7 (2 x CH₂) ; 41,6 (2xS-CH₂) ; 50,4 (2x-OCH₃) ; 59,9 (N-CH).

On a donc préparé un agent de couplage organoxysilane de formule (VII) dans laquelle :
- G³ = G² = CH₃O
- b' = b = 3
- R¹ = R⁴ = propylène
- R² = cyclohexyle.

### EXEMPLE 4

### N,N-bis(3-triéthoxysilylpropyldithio)cyclohexylamine.

Par mise en oeuvre du protocole opératoire de l'exemple 3 mais en remplaçant le 3-mercaptopropyltriméthoxysilane par le 3-mercaptopropyltriéthoxysilane, on obtient le composé de formule : 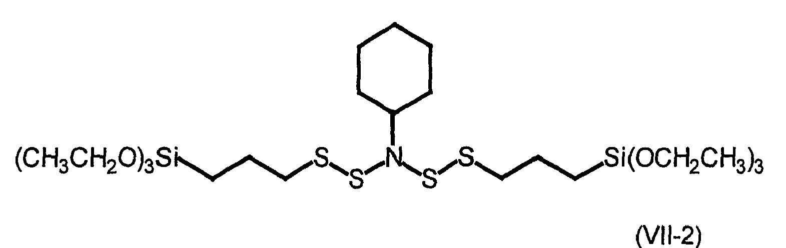
Rendement : 90%
Aspect : huile orange
RMN ¹H (CDCl₃) δ_{H}
0,75 (t, 4H, Si-CH₂); 1,21 (m, 20H, 6xCH₃ et CH₂); 1,62-1,91 (m, 8H, CH₂) ;
2,25 (m, 4H, CH₂) ; 2,40 (m, 2H, CH₂) 2,89 (t, 4H, SCH₂) ; 3,01 (m, 1 H, NCH) ;
3,81 (q, 12H, -OCH₂).
RMN ¹³C (CDCl₃) δ_{c}
9,6 (2xSi-CH₂) ; 18,1 (2xCH₃) ; 22,3 (2xCH₂) ; 26,5 (CH₂) ; 26,0 (2 x CH₂); 32,7 (2 x CH₂) ; 41,5 (2xS-CH₂) ; 58,3 (2x-OCH₂) ; 59,8 (N-CH).

### EXEMPLE 5

### N,N-bis(3-(triméthoxysilylpropyldithio)-3-triéthoxysilylpropylamine

Par mise en oeuvre du protocole opératoire de l'exemple 3 mais en remplaçant la cyclohexylamine par la 3-(triéthoxysilyl)propylamine, on obtient le composé du titre de formule : 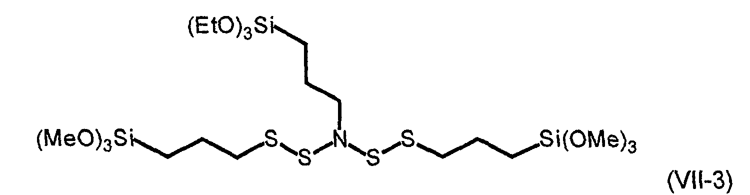
Rendement : 87%
Aspect : huile jaune
RMN ¹H (CDCl₃) δ_{H}
0,62 (t, 2H, Si-CH₂) ; 0,74 (t, 4H, Si-CH₂) ; 1,22 (t, 9H, CH₃-CH₂-O); 1,67 (m, 2H, CH₂) ; 1,83(m, 4H, CH₂) ; 2,82 (t, 4H, S-CH₂) ;
3,05 (m, 2H, CH₂) ; 3,55 (s, 18H, O-CH₃) ; 3,80 (q, 6H, -OCH₂).
RMN ¹³C (CDCl₃) δ_{c}
6,2 et 9,7 (3xSi-CH₂) ; 18,4 (CH₃-CH₂) ; 20,9 et 23,8 (3xCH₂) ; 44,0 (2xS-CH₂) ; 50,6 (2x-OCH₃) ; 54,9 (N-CH₂) ; 58,5 (-OCH₂).

### EXEMPLE 6

### N-méthyl-N-(3'-triéthoxysilylpropyldithio)-3'-triméthoxysilylpropylamine

### a) chlorure de phtalimidosulfényle

Dans un tricol muni d'une agitation magnétique, on chauffe à 60° C une suspension de 0,1 mole (35,6 g) de disulfure de phtalimide dans 350 ml de chloroforme. On fait passer un courant de chlore gazeux jusqu'à solubilisation complète. On laisse revenir le milieu réactionnel à température ambiante puis on évapore le solvant sous pression réduite. On recristallise le chlorure de phtalimidosulfényle dans du dichlorométhane.
Rendement : 99%
Aspect : cristaux jaunes
Point de fusion : 114° C
RMN ¹H (CDCl₃) δ_{H} :
7,90 (m, 2H aromatiques) ; 8,01 (m, 2H aromatiques).
RMN ¹³C (CDCl₃) δ_{c}
124,7 (2 CH aromatiques); 131,6 (2 C aromatiques) ; 135,6 (2 CH aromatiques) ; 165,8 (2 C=O),

### b) N-(N'-méthyl-N'-3'-triméthoxysilylpropyl)aminothiophtalimide

Dans un tricol muni d'une agitation magnétique et sous atmosphère inerte, on dissout le chlorure de phtalimidosulfényle (0,1 mol ; 21,35 g) dans 350 ml de chloroforme. 0,21 mole de N-méthyl-N-(3-triméthoxysilylpropyl)amine diluée dans 50 ml de chloroforme est additionnée goutte à goutte à température ambiante. On laisse agiter 3 heures puis on évapore le solvant. On reprend avec de l'éther diéthylique, filtre le chlorhydrate de l'amine puis concentre sous pression réduite.
Rendement : 88%
Aspect : huile orange
RMN ¹H (CDCl₃) δ_{H}
0,64 (t, 2H, Si-CH₂) ; 1,78 (m, 2H, CH₂) ; 2,93 (H₃C-N) ; 3,05 (t, 2H N- CH₂) ; 3,56 (s, 9H -OCH₃) ; 7,77 (m, 2H aromatiques) ; 7,92 (m, 2H aromatiques).
RMN ¹³C (CDCl₃) δ_{c}
5,9 (SiCH₂) ; 21,0 (CH₂); 46,8 (N-CH₃) ; 50,5 (-OCH₃) ;
62,9 (N-CH₂) ; 123,8 (2 CH aromatiques) ; 132,3 (2 C aromatiques); 134,2 (2 CH aromatiques) ; 169,5 (C=O).

### c) N-méthyl-N-(3'-triéthoxysilylpropyldithio)-3'-triméthoxysilylpropylamine

Dans un tricol muni d'une agitation magnétique et sous atmosphère inerte, on dissout le sulfure obtenu à l'étape précédente (50 mmol) dans 250 ml de benzène. On additionne en une fois le 3-mercapto-propyltriéthoxysilane (45 mmol) dilué dans un minimum de benzène. On laisse sous agitation à température ambiante pendant 48 heures. On filtre le phtalimide qui a précipité et le sulfure en excès puis on évapore le solvant sous pression réduite.

Le composé obtenu a pour formule : 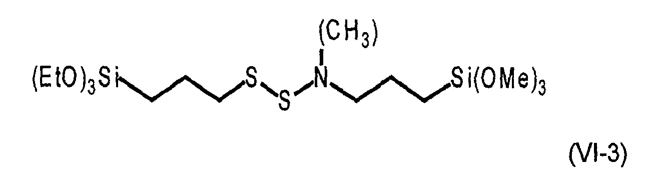
Rendement : 95%
Aspect : huile jaune
RMN ¹H (CDCl₃) δ_{H}
0,61 (t, 2H, Si-CH₂) ; 0,72 (t, 2H, Si-CH₂) ; 1,22(t, 9H, CH₃) ; 1,68 (m, 2H, CH₂) ; 1,80 (m, 2H, CH₂) ; 2,68 (NCH₃) ; 2,75 (t, 2H, CH₂) ; 2,88 (t, 2H, CH₂) ; 3,57 (s, 9H, -OCH₃) ; 3,82 (q, 6H, O-CH₂).
RMN ¹³C (COCl₃) δ_{c}
6,2 (Si-CH₂) ; 9,7 (Si-CH₂) ; 18,4 (CH₃-CH₂) ; 20,9 (CH₂) ; 23,8 (CH₂) ; 44,0 (S-CH₂) ; 46,1 (-NCH₃) ; 50,6 (-OCH₃) ; 58,5 (-OCH₂) ; 60,9 (N-CH₂).

### II - Exemples de préparation des compositions de caoutchouc

### EXEMPLES 7 et 8

Ces exemples ont pour but de démontrer les performances de couplage améliorées (charge blanche-élastomère diénique) d'un bis-alkoxysilane-dithiosulfénamide de formule (VII-2) ; ces performances sont comparées à celles d'un agent de couplage conventionnel, le TESPT. Pour ce faire, on prépare différentes compositions d'élastomères diéniques, renforcées par une charge blanche à base de silice de précipitation, lesdites compositions étant représentatives de formulations de semelles de chaussures.

On rappelle que le TESPT est le tétrasulfure de bis(3-triéthoxysilylpropyl), de formule [(C₂H₅O)₃Si(CH₂)₃S₂]₂; il est commercialisé par exemple par la société DEGUSSA sous la dénomination Si69 ou encore par la société WITCO sous la dénomination Silquest A1289 (dans les deux cas, mélange commercial de polysulfures S_{y} avec une valeur moyenne pour y qui est proche de 4).

La formule développée du TESPT est :

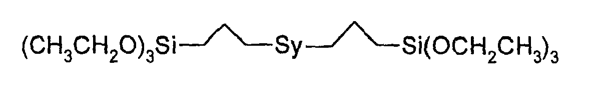

Cette formule est à comparer à celle de l'agent de couplage bis-alkoxysilane-dithiosulfénamide de formule (VII-2) :

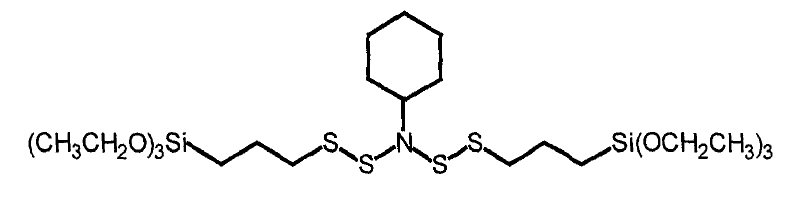

On note qu'une partie des deux structures chimiques ci-dessus est identique (fonction Y et groupe hydrocarboné - ici chaîne propylène - permettant de relier Y et X), la seule différence résidant dans la nature de la fonction soufrée (fonction X) greffable sur l'élastomère diénique : groupe polysulfure Sy pour la composition conventionnelle, groupe dithiosulfénamide pour la composition de l'invention.

Les deux agents de couplage sont utilisés ici à un taux isomolaire en silicium, c'est-à-dire qu'on utilise, quelle que soit la composition, le même nombre de moles de fonctions Y (ici Y = Si(OEt)₃) réactives vis-à-vis de la silice et de ses groupes hydroxyles de surface.

Par rapport au poids de charge renforçante, le taux d'agent de couplage, dans tous les cas représente moins de 10 % en poids par rapport à la quantité de charge renforçante.

### 1 ) Constitution des compositions :

Dans un mélangeur interne de type BRABENDER, on prépare les compositions suivantes dont la constitution, exprimée en partie en poids, est indiquée dans le tableau 1 donné ci-après :

**Tableau I**

| Composition | | Témoin 1 | Témoin 2 | Ex. 7 | Témoin 3 | Témoin 4 | Ex. 8 |
|---|---|---|---|---|---|---|---|
| Caoutchouc NR | (1) | 100 | 100 | 100 | --- | --- | -- |
| Caoutchouc SBR | (2) | --- | --- | --- | 100 | 100 | 100 |
| Silice | (3) | 50 | 50 | 50 | 40 | 40 | 40 |
| Oxyde de zinc | (4) | 3,5 | 3,5 | 3,5 | 3 | 3 | 3 |
| Acide stéarique | (5) | 3,5 | 3,5 | 3,5 | 1,5 | 1,5 | 1,5 |
| PEG | (6) | --- | --- | --- | 3 | --- | --- |
| Composé TESPT | | --- | 4 | --- | --- | 3,2 | --- |
| Composé (VII-2) | | --- | --- | 4,7 | --- | -- | 3,8 |
| CBS | (7) | 3 | 3 | 3 | --- | --- | --- |
| MBTS | (8) | --- | --- | --- | 1,5 | 1,5 | 1,5 |
| DPG | (9) | --- | --- | --- | 1,2 | 1,2 | 1,2 |
| Soufre | (10) | 1,7 | 1,7 | 1,7 | 2,2 | 2,2 | 2,2 |

| | | | | | | | |
|---|---|---|---|---|---|---|---|
| (1) Caoutchouc naturel, d'origine Malaisienne, commercialisé par la Société SAFIC-ALCAN sous la référence SMR 5L. | | | | | | | |
| (2) Copolymère styrène-butadiène, commercialisé par la Société SHELL CHIMIE sous la référence SBR 1502. | | | | | | | |
| (3) Silice hautement dispersible Zéosil 1165 MP, commercialisée par la Société RHODIA SILICES. | | | | | | | |
| (4) et (5) Activateurs de vulcanisation. | | | | | | | |
| (6) Polyéthylèneglycol de poids moléculaire 4000. | | | | | | | |
| (7) N-cyclohexyl-2-benzothiazyl-sulfénamide (accélérateur de vulcanisation). | | | | | | | |
| (8) Disulfure de mercaptobenzothiazole (accélérateur de vulcanisation). | | | | | | | |
| (9) Diphényl-guanidine (accélérateur de vulcanisation). | | | | | | | |
| (10) Agent de vulcanisation. | | | | | | | |

### 2) Constitution des compositions :

### • Compositions des témoins 1 et 2 et de l'exemple 7 :

Dans un mélangeur interne de type BRABENDER, on introduit les divers constituants dans l'ordre, aux temps et aux températures indiquées ci-après :

| Temps | Température | Constituants |
|---|---|---|
| 0 minute | 90°C | Caoutchouc NR |
| 2 minutes | 120°C | 2/3 silice + agent de couplage |
| 4 minutes | 135°C | 1/3 silice + acide stéarique + |
| | | oxyde de zinc |
| 5 minutes | 150°C | Vidange |

La vidange ou tombée du contenu du mélangeur se fait après 5 minutes. La température atteinte est de 150°C.

Le mélange obtenu est introduit ensuite sur un mélangeur à cylindres, maintenu à 30°C, et on introduit le CBS et le soufre. Après homogénéisation, le mélange final est calandré sous la forme de feuilles de 2,5 à 3 mm d'épaisseur.

### • Compositions des témoins 3 et 4 et de l'exemple 8 :

Dans un mélangeur interne de type BRABENDER, on introduit les divers constituants dans l'ordre, aux temps et aux températures indiquées ci-après :

| Temps | Température | Constituants |
|---|---|---|
| 0 minute | 90°C | Caoutchouc SBR |
| 2 minutes | 115°C | 2/3 silice + agent de couplage |
| 4 minutes | 130°C | 1/3 silice + acide stéarique + |
| | | oxyde de zinc |
| 5 minutes | 145°C | Vidange |

La vidange ou tombée du contenu du mélangeur se fait après 5 minutes. La température atteinte est de 145°C.

Le mélange obtenu est introduit ensuite sur un mélangeur à cylindres, maintenu à 30°C, et on introduit le MBTS, la DPG et le soufre. Après homogénéisation, le mélange final est calandré sous la forme de feuilles de 2,5 à 3 mm d'épaisseur.

### 3) Propriétés rhéologiques des compositions :

Les mesures sont réalisées sur les compositions à l'état cru. On a porté dans le tableau II suivant les résultats concernant le test de rhéologie qui est conduit à 150°C pendant 30 minutes à l'aide d'un rhéomètre MONSANTO 100 S.

Selon ce test la composition à tester est placée dans la chambre d'essai régulée à la température de 150°C, et on mesure le couple résistant, opposé par la composition, à une oscillation de faible amplitude d'un rotor biconique inclus dans la chambre d'essai, la composition remplissant complètement la chambre considérée. A partir de la courbe de variation du couple en fonction du temps, on détermine : le couple minimum qui reflète la viscosité de la composition à la température considérée ; le couple maximum et le delta-couple qui reflètent le taux de réticulation entraîné par l'action du système de vulcanisation ; le temps T-90 nécessaire pour obtenir un état de vulcanisation correspondant à 90 % de la vulcanisation complète (ce temps est pris comme optimum de vulcanisation) ; et le temps de grillage TS-2 correspondant au temps nécessaire pour avoir une remontée de 2 points au dessus du couple minimum à la température considérée (150°C) et qui reflète le temps pendant lequel il est possible de mettre en oeuvre les mélanges crus à cette température sans avoir d'initiation de la vulcanisation.

Les résultats obtenus sont indiqués dans le tableau II.

**Tableau II**

| Rhéologie MONSANTO | Témoin 1 | Témoin 2 | Exemple 7 | Témoin 3 | Témoin 4 | Exemple 8 |
|---|---|---|---|---|---|---|
| Couple mini | 17,9 | 11,6 | 10 | 18,9 | 14 | 12 |
| Couple maxi | 82,5 | 95,5 | 98,7 | 97 | 100 | 102 |
| Delta-couple | 64,6 | 83,9 | 88,7 | 76,1 | 86 | 90 |
| TS-2 (*minutes*,*secondes*) | 12'30" | 9'56" | 9'46" | 3'30" | 4' | 3'50" |
| T-90 (minutes,secondes) | 21'20" | 19'05" | 14'05" | 7'30" | 12'20" | 9'30" |

### 4) Propriétés mécaniques des vulcanisats :

Les mesures sont réalisées sur les compositions uniformément vulcanisées 40 minutes à 150°C.

Les propriétés mesurées et les résultats obtenus sont rassemblés dans le tableau III suivant :

**Tableau III**

| Propriétés mécaniques | | Témoin 1 | Témoin 2 | Ex. 7 | Témoin 3 | Témoin 4 | Ex. 8 |
|---|---|---|---|---|---|---|---|
| Module 100% | (1) | 1,2 | 3,3 | 3,9 | 1,8 | 2,2 | 2,4 |
| Module 300% | (1) | 3,9 | 14,3 | 17,5 | 4,7 | 10,3 | 11,7 |
| Allongement à la rupture | (1) | 740 | 470 | 410 | 630 | 460 | 450 |
| Résistance à la rupture | (1) | 23,7 | 25,5 | 25 | 16,2 | 18,6 | 19,5 |
| Indices de renforcement : | | | | | | | |
| M 300 % / M 100 % | | 3,25 | 4,33 | 4,5 | 2,6 | 4,7 | 4,9 |
| Dureté Shore A | (2) | 58 | 72 | 72 | 70 | 68 | 68 |
| Résistance à l'abrasion | (3) | 270 | 98 | 92 | 190 | 121 | 106 |
| Propriétés dynamiques à 70°C : tangente delta | (4) | 0,123 | 0,069 | 0,053 | --- | --- | --- |

(1) Les essais de traction sont réalisés conformément aux indications de la norme NF T 46-002 avec des éprouvettes de type H2. Les modules 100 %, 300 %, et la résistance à la rupture sont exprimés en MPa ; l'allongement à la rupture est exprimé en %.
(2) La mesure est réalisée selon les indications de la norme ASTM D 3240. La valeur donnée est mesurée à 15 secondes.
(3) La mesure est réalisée selon les indications de la norme NF T 46-012 en utilisant la méthode 2 avec porte éprouvette tournant. La valeur mesurée est la perte de substance (en mm³) à l'abrasion ; plus elle est faible et meilleure est la résistance à l'abrasion.
(4) La tangente delta exprime le rapport entre le module visqueux et le module élastique du vulcanisat dans les conditions de l'essai (déformation sinusoïdale à 70°C, fréquence de déformation 10 hertz et amplitude de déformation plus ou moins 4 %). Plus cette valeur est basse plus l'énergie absorbée par l'éprouvette vulcanisée sera faible dans les conditions d'essai précisées, et plus l'énergie restituée sera élevée.

L'examen des différents résultats conduit aux observations suivantes :
- on constate que le TESPT permet à la fois d'abaisser la viscosité du mélange cru (cf. couple mini) et d'augmenter le couple maxi et le delta-couple, mais l'agent de couplage selon la présente invention est, à cet égard, plus performant que le TESPT puisqu'il permet d'obtenir des mélanges crus ayant une viscosité plus basse et un couple maxi plus élevé, d'où un delta-couple plus important ;
- on constate encore que la cinétique de vulcanisation (cf. le temps T-90 qui est le reflet de la cinétique de vulcanisation) est accéléré avec l'agent de couplage selon la présente invention, par rapport à ce qui se passe avec le TESPT, ce qui constitue un réel avantage dans la mesure où le temps de grillage TS-2 n'est pas significativement modifié ;
- on constate encore, en matières de modules et d'indice de renforcement, que, par rapport au témoin contenant le TESPT (témoins 2 et 4), l'agent de couplage selon la présente invention confère des modules plus élevés, mais cette augmentation est plus sensible pour les forts allongements, ce qui est mis en évidence par une augmentation de l'indice de renforcement ; pareille augmentation de l'indice de renforcement traduit un meilleur couplage de la charge blanche à la matrice de caoutchouc ;
- on constate encore, en matière de résistance à l'abrasion, que l'agent de couplage selon l'invention confère une bonne résistance à l'abrasion qui est égale ou supérieure à celle obtenue avec le TESPT ;
- on constate enfin, que la tangente delta (qui est le reflet de l'énergie absorbée ou restituée par le vulcanisat lors d'une déformation dans les conditions d'essai mentionnées) la plus basse est obtenue avec l'agent de couplage selon l'invention. Dans ce cas, ce résultat indique donc que l'énergie absorbée est plus faible dans le cas du vulcanisat comprenant l'agent de couplage selon l'invention.

## Revendications

1. Composé organosilicique comportant, par molécule, liés à des atomes de silicium, d'une part au moins un groupe hydroxyle ou un groupe monovalent hydrolysable, et d'autre part une fonction X capable de ragir avec un élastomère caoutchouc, ledit composé organosilicique étant cractérisé en ce que la fonction X consiste dans au moins un groupe fonctionnel polythiosulfénamide de formule : 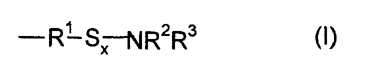
dans laquelle :
■ la valence libre est liée à un atome de silicium du composé organosilicique ;
■ le symbole R¹ représente un radical divalent choisi parmi : un groupe hydrocarboné aliphatique, saturé ou insaturé ; un groupe carbocyclique, saturé, insaturé ou/et aromatique, monocyclique ou polycyclique ; et un groupe présentant une partie hydrocarbonée aliphatique, saturée ou insaturée et une partie carbocyclique telle que définie ci-dessus ; ledit radical divalent étant éventuellement substitué ou interrompu par un atome d'oxygène et/ou un atome d'azote portant 1 à 2 groupes monovalents choisis parmi : un atome d'hydrogène ; un groupe hydrocarboné aliphatique, saturé ou insaturé ; un groupe carbocyclique, saturé, insaturé ou/et aromatique, monocyclique ou polycyclique ; et un groupe présentant une partie hydrocarbonée aliphatique, saturée ou insaturée et une partie carbocyclique telle que définie ci-dessus ;
■ x est un nombre entier ou fractionnaire, allant de 2 à 4 ;
■ l'un des substituants de l'atome d'azote, R² ou R³, représente : un atome d'hydrogène ; un groupe hydrocarboné aliphatique saturé ; un groupe carbocyclique saturé ou/et aromatique, monocyclique ou polycyclique ; un groupe présentant une partie hydrocarbonée aliphatique saturée et une partie carbocyclique saturée ou/et aromatique, monocyclique ou polycyclique ; ou le groupe de formule : 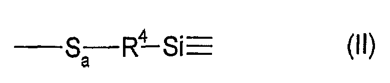
dans laquelle :
■ a représente un nombre égal à 0 ou x ; quand a = x, les symboles x des formules (I) et (II) peuvent être alors identiques ou différents entre eux ;
■ le symbole R⁴ prend l'une quelconque des significations données ci-avant pour R¹, les symboles R¹ et R⁴ pouvant être identiques ou différents entre eux ;
■ le symbole Si≡ représente un atome de silicium du composé organosilicique, autre que celui auquel est liée la valence libre du radical R¹ de la formule (I) ;
■ l'autre substituant de l'atome d'azote, respectivement R³ ou R², représente le groupe de formule (II) tel que défini ci-avant, avec la condition selon laquelle le symbole Si≡ représente alors un atome de silicium du composé organosilicique qui, d'une part, est autre que celui auquel est liée la valence libre du radical R¹ de la formule (I) et, d'autre part, est autre encore que l'atome de silicium de l'autre groupe de formule (II), dans le cas où les deux substituants de l'atome d'azote, R² et R³, représentent l'un et l'autre un groupe de formule (II).

2. Composé organosilicique selon la revendication 1, **caractérisé en ce que** le groupe polythiosulfénamide répond à la formule (I) où au moins un des substituants de l'atome d'azote R² et R³ possède la formule (II) avec a = 0, c'est-à-dire , quand c'est R³ qui possède ladite formule (II) avec a = 0, répond à la formule : 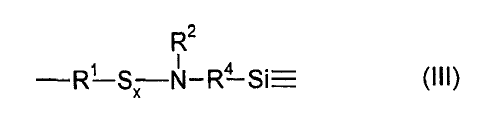
dans laquelle :
■ R¹ représente : une chaîne alkylène en C₁-C₈ ; un groupe cycloalkylène saturé en C₅-C₁₀ ; un groupe arylène en C₆-C₁₈ ; ou un groupe divalent constitué d'une combinaison d'au moins deux de ces radicaux ;
■ x est un nombre, entier ou fractionnaire, allant de 2 à 3 ;
■ R² représente : un atome d'hydrogène ; un radical alkyle, linéaire ou ramifié, en C₁-C₈ un radical cycloalkyle en C₅-C₁₀; un radical aryle en C₆-C₁₈ ; un radical (C₆-C₁₈)aryl-(C₁-C₈)alkyle ; ou le groupe de formule (II) dans laquelle a = 0 et R⁴ possède les définitions mentionnées ci-après dans la présente revendication ;
■ le symbole R⁴ prend l'une quelconque des significations données ci-avant pour R¹ dans la présente revendication, les symboles R¹ et R⁴ pouvant être identiques ou différents entre eux.

3. Composé organosilicique selon les revendications 1 et 2, **caractérisé en ce que** le groupe polythiosulfénamide répond à la formule (I) où un seul des substituants de l'azote, R² ou R³, possède la formule (II) avec a = x, c'est-à-dire répond, quand c'est R3 qui possède ladite formule (II) avec a = x, à la formule : 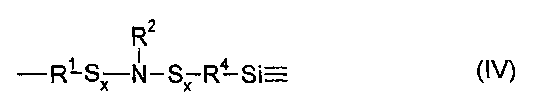
dans laquelle les symboles R¹, x, R² et R⁴ prennent l'une quelconque des significations données ci-avant dans la revendication 2, avec la condition supplémentaire selon laquelle les symboles x de la formule donnée supra peuvent être identique ou différents entre eux.

4. Composé organosilicique selon la revendication 1, **caractérisé en ce qu'**il est choisi parmi les composés organosiliciques polysilylés fonctionnels porteurs d'un groupe polythiosulfénamide, répondant à la formule générale : 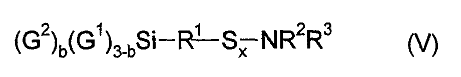
dans laquelle :
■ b représente un nombre choisi parmi 1, 2 et 3 ;
■ les symboles G¹, identiques ou différents, représentent chacun : un groupe hydrocarboné aliphatique, saturé ou insaturé ; un groupe carbocyclique, saturé, insaturé et/ou aromatique, monocyclique ou polycyclique ; ou un groupe présentant une partie hydrocarbonée aliphatique, saturée ou insaturée et une partie carbocyclique telle que définie ci-dessus ;
■ les symboles G², identiques ou différents, représentent chacun : un groupe hydroxyle ou un groupe monovalent hydrolysable ;
■ R¹, x, R² et R³ prennent l'une quelconque des significations générales données ci-avant à propos de la formule (I), avec la condition supplémentaire selon laquelle l'un des substituants R² ou R³ ou les deux substiuants R² et R³ représente(nt) alors un groupe silylé de formule : 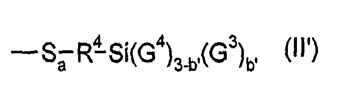
dans laquelle :
■ a et R⁴ ont les significations générales données ci-avant à propos de la formule (II) ;
■ G³, G⁴ et b' ont, respectivement, les mêmes significations que G², G¹ et b données juste ci-avant dans la formule (V), les symboles G³, G⁴ et b' pouvant, respectivement, être identiques ou différents aux/des symboles G², G¹ et b.

5. Composé organosilicique selon les revendications 4 et 2, **caractérisé en ce qu'**il est choisi parmi des des composés organosiliciques polysilylés fonctionnels où, dans le groupe polythiosulfénamide, au moins un des substituants R² et R³ répond à la formule particulière (II') avec a = 0 ; de pareils composés, dans le cas où un seul substituant R³ répond à la formule particulière (II') avec a = 0, ayant la formule : 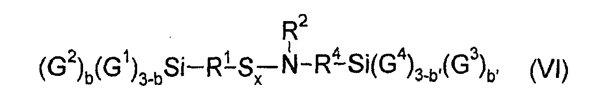
dans laquelle :
■ R¹ x, R² et R⁴ prennent l'une quelconque des significations données supra dans la revendication 2;
■ b représente un nombre choisi parmi 1, 2 et 3 ;
■ les symboles G¹, identiques ou différents, représentent chacun : un radical alkyle, linéaire ou ramifié, en C₁-C₈ ; un radical cycloalkyle en C₅-C₁₀ ou un radical aryle en C₆-C₁₈ ;
■ les symboles G², identiques ou différents, représentent chacun : un radical alkoxy, linéaire ou ramifié, en C₁-C₈, éventuellement substitué par un ou plusieurs (C₁-C₈)alkoxy ;
■ G³, G⁴ et b' ont, respectivement, les mêmes définitions larges ou spécifiques que G², G¹ et b données juste supra, les symboles G³, G⁴ et b' pouvant, respectivement, être identiques ou différents aux/des symboles G² G¹ et b.

6. Composé organosilicique selon les revendications 4, 5, 2 et 3, **caractérisé en ce qu'**il est choisi parmi des composés organosiliciques polysilylés fonctionnels où, dans le groupe polythiosulfénamide, un seul des substituants R² ou R³ répond à la formule particulière (II') avec a = x ; de pareils composés, dans le cas où c'est le substituant R³ qui répond seul à la formule particulière (II') avec a = x, ayant la formule : 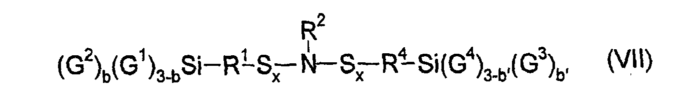
dans laquelle R¹, x, R², R⁴, b, G1, G2, G³, G⁴ et b' ont, respectivement, les mêmes significations que celles données supra dans la formule (VI) de la revendication 5, les symboles x pouvant être identiques ou différents entre eux et les symboles R⁴, G³, G⁴ et b' pouvant, respectivement, être identiques ou différents aux/des symboles R¹, G², G¹ et b.

7. Procédé de préparation des composés organosiliciques selon l'une quelconque des revendications 4 à 6, **caractérisé en ce que**, lorsque x = 2, lesdits composés sont obtenus par réaction d'un halogénure de disulfure de formule :
(G²)_{b}(G¹)_{3-b}Si-R¹-S-S-Hal (VIII)
dans laquelle G², G¹, b et R¹ sont tels que définis supra et Hal représente halogène sur l'amine appropriée de formule :
HNR²R³ (IX)
dans laquelle R² et R³ sont tels que définis supra, en présence d'une base.

8. Procédé de préparation des composés organosiliciques selon l'une quelconque des revendications 4 à 6, **caractérisé en ce que**, lorsque x = 2, lesdits composés sont obtenus par réaction d'un disulfure de formule :
(G²)_{b}(G¹)_{3-b}Si-R¹-S-S-J (X)
dans laquelle G², G¹, b, et R¹ sont tels que définis supra et J représente le groupe succinimido ou phtalimido éventuellement substitué, sur l'amine HNR²R³ (IX) définie supra, en présence d'une base.

9. Procédé de préparation des composés organosiliciques selon l'une quelconque des revendications 4 à 6, **caractérisé en ce que**, lorsque x = 2, lesdits composés sont obtenus par réaction d'un aminosulfure de formule :
J-S-NR²R³ (XI)
dans laquelle R², R³ et J sont tels que définis supra, avec un thiol de formule :
(G²)_{b}(G¹)_{3-b}Si-R¹-SH (XII)
dans laquelle G², G¹, b et R¹ sont tels que définis supra, en présence d'une base.

10. Procédé de préparation des composés organosiliciques selon l'une quelconque des revendications 4 à 6, **caractérisé en ce que**, lorsque x = 3, lesdits composés sont obtenus en enchaînant les étapes suivantes :
(1) réaction du thiol de formule (XII) avec S₂(Hal)₂ où Hal représente un atome d'halogène, en présence d'une base, pour donner :
(G²)_{b}(G¹)_{3-b}Si-R¹-S-S-S-Hal (XVII)
cette réaction étant mise en oeuvre dans un éther à une température de -78 à -50°C;
(2) réaction du composé (XVII) sur l'amine appropriée de formule (IX) en présence d'une base.

11. Procédé de préparation des composés organosiliciques selon l'une quelconque des revendications 4 à 6, **caractérisé en ce que**, lorsque x = 4, lesdits composés sont obtenus en enchaînant les étapes suivantes :
(1) réaction de l'halogénure de disulfure de formule (VIII) ou de l'halogénure de trisulfure de formule (XVII) avec la quantité requise de soufre élémentaire [apport de 2 atomes de soufre dans le cas du composé (VIII) ou apport de 1 atomes de soufre dans le cas du composé (XVII)], en opérant à une température allant de +70 °C à +170 °C, en présence éventuellement d'un solvant aromatique, pour donner le composé de formule :
(G²)_{b}(G¹)_{3-b}Si-R'-S-S-S-S-Hal (XVIII)
(2) réaction du composé de formule (XVIII) sur l'amine appropriée de formule (IX) en présence d'une base.

12. Utilisation d'une quantité efficace :
■ (i) d'au moins un composé organosilicique porteur de groupe(s) à fonction polythiosulfénamide de formule (I), (III) ou (IV) selon l'une quelconque des revendications 1 à 3, ou (2i), en particulier, d'au moins un composé organosilicique polysilylé fonctionnel répondant à la formule (V), (VI) ou (VII) selon l'une quelconque des revendications 4 à 6,
■ comme agent de couplage charge blanche-élastomère,
■ dans les compositions comprenant au moins un élastomère diénique et une charge blanche à titre de charge renforçante, compositions destinées à la fabrication d'articles en élastomère(s) diénique(s).

13. Compositions d'élastomère(s) diénique(s) comprenant une charge blanche renforçante, obtenues grâce à l'emploi d'une quantité efficace (i) d'au moins un composé organosilicique porteur de groupe(s) à fonction polythiosulfénamide de formule (I), (III) ou (IV) selon l'une quelconque des revendications 1 à 3, ou (2i), en particulier, d'au moins un composé organosilicique polysilylé fonctionnel répondant à la formule (V), (VI) ou (VII) selon l'une quelconque des revendications 4 à 6.

14. Compositions selon la revendication 13, **caractérisées en ce qu'**elles comprennent (les parties sont données en poids) :
• pour 100 parties d'élastomère(s) diénique(s),
• 10 à 200 parties de charge blanche renforçante, et
• 1 à 20 parties d'agent(s) de couplage.

15. Compositions selon la revendication 14, **caractérisées en ce qu'**elles comprennent :
• pour 100 parties d'élastomère(s) diénique(s),
• 20 à 150 parties de charge blanche renforçante, et
• 2 à 20 parties d'agent(s) de couplage.

16. Compositions selon l'une quelconque des revendications 13 à 15, **caractérisées en ce que** la charge blanche renforçante consiste dans la silice, l'alumine ou un mélange de ces deux espèces.

17. Compositions selon la revendication 16, **caractérisées en ce que** :
• la silice est une silice de précipitation, classique ou hautement dispersible, présentant une surface spécifique BET ≤ à 450 m²/g ;
• l'alumine est une alumine hautement dispersible, présentant une surface spécifique BET allant de 30 à 400 m²/g et un taux élevé de fonction réactive de surface Al-OH.

18. Compositions selon l'une quelconque des revendications 13 à 17, **caractérisées en ce que** le (ou les) élastomère(s) diénique(s) est (sont) choisi(s) parmi :
(1) les homopolymères obtenus par polymérisation d'un monomère diène conjugué ayant de 4 à 22 atomes de carbone ;
(2) les copolymères obtenus par copolymérisation d'au moins deux des diènes conjugués précités entre eux ou par copolymérisation d'un ou plusieurs des diènes conjugués précités avec un ou plusieurs monomères insaturés éthyléniquement choisis parmi :
- les monomères vinyles aromatiques ayant de 8 à 20 atomes de carbone ;
- les monomères nitriles vinyliques ayant de 3 à 12 atomes de carbone ;
- les monomères esters acryliques dérivés de l'acide acrylique ou de l'acide méthacrylique avec des alcanols ayant de 1 à 12 atomes de carbone ;
les copolymères peuvent contenir entre 99 % et 20 % en poids d'unités diéniques et entre 1 % et 80 % en poids d'unités vinyles aromatiques, nitriles vinyliques et/ou esters acryliques ;
(3) les copolymères ternaires obtenus par copolymérisation d'éthylène, d'une α-oléfine ayant 3 à 6 atomes de carbone avec un monomère diène non conjugué ayant de 6 à 12 atomes de carbone ;
(4) le caoutchouc naturel ;
(5) les copolymères obtenus par copolymérisation d'isobutène et d'isoprène (caoutchouc butyle), ainsi que les versions halogénées de ces copolymères ;
(6) un mélange de plusieurs des élastomères précités (1) à (5) entre eux.

19. Compositions selon la revendication 18, **caractérisées en ce que** l'on fait appel à un ou plusieurs élastomère(s) choisi(s) parmi : (1) le polybutadiène, le polychloroprène, le polyisoprène [ou poly(méthyl-2 butadiène-1,3)] ; (2) le poly(isoprène-butadiène), le poly(isoprène-styrène), le poly(isoprène-butadiène-styrène), le poly(butadiène-styrène), le poly(butadiène-acrylonitrile) ; (4) le caoutchouc naturel ; (5) le caoutchouc butyle ; (6) un mélange des élastomères nommément précités (1), (2), (4), (5) entre eux ; (6') un mélange contenant une quantité majoritaire (allant de 51 % à 99,5 % en poids) de polyisoprène (1) et/ou de caoutchouc naturel (4) et une quantité minoritaire (allant de 49 % à 0,5 % en poids) de polybutadiène, de polychloroprène, de poly(butadiène-styrène) et/ou de poly(butadiène-acrylonitrile).

20. Compositions selon l'une quelconque des revendications 13 à 19, **caractérisées en ce qu'**elles contiennent en outre tout ou partie des autres constituants et additifs auxiliaires habituellement utilisés dans le domaine des compositions d'élastomère(s) et de caoutchouc(s), lesdits autres constituants et additifs comprenant :
• s'agissant du système de vulcanisation :
- des agents de vulcanisation choisis parmi le soufre ou des composés donneurs de soufre ;
- des accélérateurs de vulcanisation ;
- des activateurs de vulcanisation ;
• s'agissant d'autre(s) additif(s) :
- une charge renforçante conventionnelle consistant dans le noir de carbone ;
- une charge blanche conventionnelle peu ou non renforçante;
- des agents antioxydants ;
- des agents antiozonants ;
- des agents de plastification et des agents d'aide à la mise en oeuvre.

21. Procédé de préparation des compositions d'élastomère(s) diénique(s) selon l'une quelconque des revendications 13 à 20, **caractérisé en ce que** :
• on introduit et malaxe dans un mélangeur interne usuel, en une ou deux étapes, tous les constituants nécessaires à l'exception du (ou des) agent(s) de vulcanisation et éventuellement : du (ou des) accélérateurs de vulcanisation et/ou du (ou des) activateur(s) de vulcanisation, en opérant à une température allant de +80°C à +200°C ;
• puis le mélange ainsi obtenu est repris ensuite sur un mélangeur externe et on y ajoute alors le (ou les) agent(s) de vulcanisation et éventuellement : le (ou les) accélérateur(s) de vulcanisation et/ou le (ou les) activateur(s) de vulcanisation, en opérant à une température plus basse, inférieure à +120°C.

22. Articles en élastomère(s), **caractérisés en ce qu'**ils possèdent un corps comprenant une composition selon l'une quelconque des revendications 13 à 20.

23. Articles selon la revendication 22, **caractérisés en ce qu'**ils consistent dans des supports de moteurs, des semelles de chaussures, des galets de téléphérique, des joints d'appareillages électroménagers et des gaines de câbles.

## Patentansprüche

1. Organosilicium-Verbindung, umfassend pro Molekül, gebunden an Siliciumatome, einerseits mindestens eine Gruppe Hydroxyl oder eine hydrolysierbare monovalente Gruppe und andererseits eine Funktion X, die fähig ist, mit einem Kautschuk-Elastomer zu reagieren, wobei die genannte Organosilicium-Verbindung **dadurch gekennzeichnet ist, daß** die Funktion X aus mindestens einer funktionellen Gruppe Polythiosulfenamid der Formel (I) 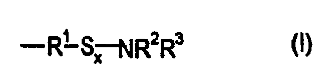
besteht, in der
· die freie Valenz an ein Siliciumatom der Organosilicium-Verbindung gebunden ist;
· das Symbol R¹ einen divalenten Rest darstellt, ausgewählt unter: einer aliphatischen, gesättigten oder ungesättigten Kohlenwasserstoff-Gruppe; einer gesättigten, ungesättigten oder/und aromatischen, monocyclischen oder polycyclischen carbocyclischen Gruppe; und einer Gruppe, die einen aliphatischen, gesättigten oder ungesättigten Kohlenwasserstoff-Teil und einen wie oben definierten carbocyclischen Teil aufweist; wobei der genannte divalente Rest gegebenenfalls substituiert oder durch ein Sauerstoffatom und/oder ein Stickstoffatom unterbrochen ist, das seinerseits 1 bis 2 monovalente Gruppen trägt, ausgewählt unter: einem Wasserstoffatom; einer aliphatischen, gesättigten oder ungesättigten Kohlenwasserstoff-Gruppe, einer gesättigten, ungesättigten oder/und aromatischen, monocyclischen oder polycyclischen carbocyclischen Gruppe; und einer Gruppe, die einen aliphatischen, gesättigten oder ungesättigten Kohlenwasserstoff-Teil und einen wie oben definierten carbocyclischen Teil aufweist;
· x eine ganze oder gebrochene Zahl darstellt, die von 2 bis 4 reicht;
· einer der Substituenten des Stickstoffatoms, R² oder R³, darstellt: ein Wasserstoffatom; eine aliphatische gesättigte Kohlenwasserstoff-Gruppe; eine gesättigte oder/und aromatische, monocyclische oder polycyclische carbocyclische Gruppe; eine Gruppe, die einen aliphatischen gesättigten Kohlenwasserstoff-Teil und einen gesättigten und/oder aromatischen, monocyclischen oder polycyclischen carbocyclischen Teil aufweist; oder die Gruppe der Formel (II) 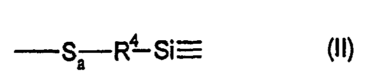
in der
. a eine ganze Zahl von 0 oder x darstellt; wenn a = x ist, können die Symbole x der Formeln (I) und (II) untereinander gleich oder verschieden sein;
. das Symbol R⁴ irgendeine der oben für R¹ angegebenen Bedeutungen annimmt, wobei die Symbole R¹ und R⁴ untereinander gleich oder verschieden sein können;
. das Symbol Si ≡ ein Siliciumatom der Organosilicium-Verbindung darstellt, das anders ist als das, woran die freie Valenz des Restes R¹ der Formel (I) gebunden ist:
· der andere Substituent des Stickstoffatoms, jeweils R³ oder R², die wie oben definierte Gruppe der Formel (II) darstellt, unter der Bedingung, gemäß der das Symbol Si≡ dann ein Siliciumatom der Organosilicium-Verbindung bedeutet, das einerseits anders ist als das, woran die freie Valenz des Restes R¹ der Formel (I) gebunden ist, und andererseits auch anders ist als das Siliciumatom der anderen Gruppe der Formel (II), in dem Fall, wo die zwei Substituenten des Stickstoffatoms, R² und R³, untereinander eine Gruppe der Formel (II) darstellen.

2. Organosilicium-Verbindung nach Anspruch 1, **dadurch gekennzeichnet, daß** die Gruppe Polythiosulfenamid der Formel (I) entspricht, worin mindestens einer der Substituenten des Stickstoffatoms R² und R³ die Formel (II) besitzt, mit a = 0, das heißt, 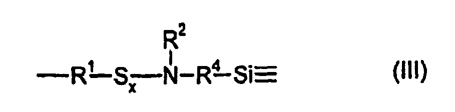
wenn R³ die genannte Formel (II) mit a = 0 besitzt, sie der Formel (III) entspricht:
in der
· R¹ darstellt: eine Kette Alkylen mit 1 bis 8 Kohlenstoffatomen; eine gesättigte Gruppe Cycloalkylen mit 5 bis 10 Kohlenstoffatomen; eine Gruppe Arylen mit 6 bis 18 Kohlenstoffatomen; oder eine divalente Gruppe, bestehend aus einer Kombination von mindestens zwei dieser Reste;
· x eine ganze oder gebrochene Zahl darstellt, die von 2 bis 3 reicht;
· R² darstellt: ein Wasserstoffatom; einen linearen oder verzweigten Reste Alkyl mit 1 bis 8 Kohlenstoffatomen; einen Rest Cycloalkyl mit 5 bis 10 Kohlenstoffatomen; einen Rest Aryl mit 6 bis 18 Kohlenstoffatomen; einen Rest (C₆-C₁₈)Aryl-(C₁-C₈)-alkyl; oder die Gruppe der Formel (II), in der a = 0 ist und R⁴ die nachfolgend in dem vorliegenden Anspruch erwähnten Bedeutungen besitzt;
· das Symbol R⁴ irgendeine der oben für R¹ in dem vorliegenden angegebenen Bedeutungen annimmt, wobei die Symbole R¹ und R⁴ untereinander gleich oder verschieden sein können.

3. Organosilicium-Verbindung nach Anspruch 1 und 2, **dadurch gekennzeichnet, daß** die Gruppe Polythiosulfenamid der Formel (I) entspricht, worin nur einer der Substituenten des Stickstoffs, R² oder R³, die Formel (II) besitzt, mit a = x, das heißt, wenn R³ die genannte Formel (II) mit a = x besitzt, sie der Formel (IV) entspricht: 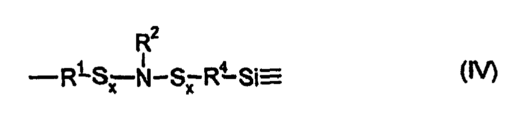
in der die Symbole R¹, x, R² und R⁴ irgendeine der oben in Anspruch 2 angegebenen Bedeutungen annehmen, unter der zusätzlichen Bedingung, gemäß der die Symbole x der oben angegebenen Formel untereinander gleich oder verschieden sein können.

4. Organosilicium-Verbindung nach Anspruch 1, **dadurch gekennzeichnet, daß** sie ausgewählt wird unter den funktionellen polysilylierten Organosilicium-Verbindungen, die eine Gruppe Polythiosulfenamid tragen und der allgemeinen Formel (V) entsprechen: 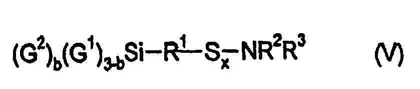
in der
· b eine Zahl darstellt, ausgewählt unter 1, 2 und 3;
· die Symbole G¹, gleich oder verschieden, jeweils darstellen: eine aliphatische, gesättigte oder ungesättigte Kohlenwasserstoff-Gruppe; eine gesättigte, ungesättigte und/oder aromatische, monocyclische oder polycyclische carbocyclische Gruppe; oder eine Gruppe, die einen aliphatischen, gesättigten oder ungesättigten Kohlenwasserstoff-Teil und einen wie oben definierten carbocyclischen Teil aufweist;
· die Symbole G², gleich oder verschieden, jeweils darstellen: eine Gruppe Hydroxyl oder eine monovalente hydrolysierbare Gruppe;
· R¹, x, R² und R³ irgendeine der oben bei der Formel (I) angegebenen allgemeinen Bedeutungen annehmen, mit der zusätzlichen Bedingung, gemäß der einer der Substituenten R² oder R³ oder die beiden Substituenten R² und R³ dann eine Gruppe Silyl der Formel (II') darstellt(en): 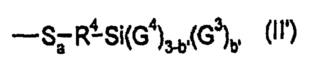
in der
. a und R⁴ die oben bei der Formel (II) angegebenen allgemeinen Bedeutungen besitzen;
. G³, G⁴ und b' jeweils die gleichen Bedeutungen wie G², G¹ und b besitzen, wie sie oben bei der Formel (V) angegeben wurden, wobei die Symbole G³, G⁴ und b' jeweils gleich oder verschieden zu/von den Symbolen G², G¹ und b sein können.

5. Organosilicium-Verbindung nach Anspruch 4 und 2, **dadurch gekennzeichnet, daß** sie ausgewählt wird unter den funktionellen polysilylierten Organosilicium-Verbindungen, worin in der Gruppe Polythiosulfenamid mindestens einer der Substituenten R² und R³ der besonderen Formel (II') mit a = 0 entspricht, wobei ähnliche Verbindungen in dem Fall, wo nur ein Substituent R³ der besonderen Formel (II') mit a = 0 entspricht, die Formel (VI) besitzen: 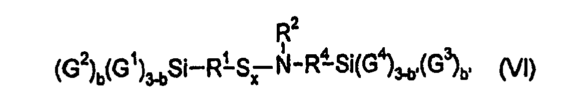
in der
· R¹, x, R² und R⁴ irgendeine der oben in Anspruch 2 angegebenen Bedeutungen annehmen;
· b eine Zahl darstellt, ausgewählt unter 1, 2 und 3;
· die Symbole G¹, gleich oder verschieden, jeweils darstellen: einen linearen oder verzweigten Rest Alkyl mit 1 bis 8 Kohlenstoffatomen; einen Rest Cycloalkyl mit 5 bis 10 Kohlenstoffatomen oder einen Rest Aryl mit 6 bis 18 Kohlenstoffatomen;
· die Symbole G², gleich oder verschieden, jeweils darstellen: einen linearen oder verzweigten Rest Alkoxy mit 1 bis 8 Kohlenstoffatomen, gegebenenfalls substituiert durch ein oder mehrere (C₁-C₈)alkoxy;
· G³, G⁴ und b' jeweils die gleichen breiten oder spezifischen Bedeutungen wie G², G¹ und b besitzen, wie sie weiter oben angegeben wurden, wobei die Symbole G³, G⁴ und b' jeweils gleich oder verschieden zu/von den Symbolen G², G¹ und b sein können.

6. Organosilicium-Verbindung nach Anspruch 4, 5, 2 und 3, **dadurch gekennzeichnet, daß** sie ausgewählt wird unter den funktionellen polysilylierten Organosilicium-Verbindungen, worin in der Gruppe Polythiosulfenamid nur einer der Substituenten R² oder R³ der besonderen Formel (II') mit a = x entspricht, wobei ähnliche Verbindungen in dem Fall, wo der Substituent R³ allein der besonderen Formel (II') mit a = x entspricht, die Formel (VI) besitzen: 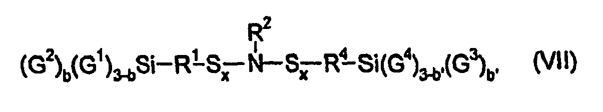
in der
· R¹, x, R², R⁴, b, G¹, G², G³, G⁴ und b' jeweils die gleichen Bedeutungen besitzen wie oben bei der Formel (VI) von Anspruch 5 angegeben; wobei die Symbole x untereinander gleich oder verschieden sein können und die Symbole R⁴ , G³, G⁴ und b' jeweils gleich oder verschieden zu/von den Symbolen R¹, G², G¹ und b sein können.

7. Verfahren zur Herstellung der Organosilicium-Verbindungen nach irgendeinem der Ansprüche 4 bis 6, **dadurch gekennzeichnet, daß** in dem Fall, wo x = 2 ist, die genannten Verbindungen erhalten werden durch Reaktion eines Disulfid-halogenids der Formel (VIII)
**(G**^{**2**}**)**_{**b**}**(G**^{**1**}**)**_{**3-b**}**Si-R**^{**1**}**-S-S-Hal** (VIII)
in der G², G¹, b und R¹ wie oben definiert sind und Hal Halogen darstellt, mit einem geeigneten Amin der Formel (IX)
HNR²R³ (IX)
in der R² und R³ wie oben definiert sind, in Anwesenheit einer Base.

8. Verfahren zur Herstellung der Organosilicium-Verbindungen nach irgendeinem der Ansprüche 4 bis 6, **dadurch gekennzeichnet, daß** in dem Fall, wo x = 2 ist, die genannten Verbindungen erhalten werden durch Reaktion eines Disulfides der Formel (X)
**(G**^{**2**}**)**_{**b**}**(G**^{**1**}**)**_{**3-b**}**Si-R**^{**1**}**-S-S-J** (X)
in der G², G¹, b und R¹ wie oben definiert sind und J die Gruppe Succinimido oder Phthalimido, gegebenenfalls substituiert, darstellt, mit dem wie oben definierten Amin HNR²R³ (IX) in Anwesenheit einer Base.

9. Verfahren zur Herstellung der Organosilicium-Verbindungen nach irgendeinem der Ansprüche 4 bis 6, **dadurch gekennzeichnet, daß** in dem Fall, wo x = 2 ist, die genannten Verbindungen erhalten werden durch Reaktion eines Aminosulfides der Formel (XI)
**J-S-NR**^{**2**}**R**^{**3**} **(XI)**
in der R², R³, und J wie oben definiert sind, mit einem Thiol der Formel (XII)
**(G**^{**2**}**)**_{**b**}**(G**^{**1**}**)**_{**3-b**}**Si-R**^{**1**}**-SH** (XII)
in der G², G¹, b und R¹ wie oben definiert sind, in Anwesenheit einer Base.

10. Verfahren zur Herstellung der Organosilicium-Verbindungen nach irgendeinem der Ansprüche 4 bis 6, **dadurch gekennzeichnet, daß** in dem Fall, wo x = 3 ist, die genannten Verbindungen erhalten werden, indem man die folgenden Stufen aneinanderreiht:
(1) Reaktion des Thiols der Formel (XII) mit S₂(Hal)₂, worin Hal ein Halogenatom darstellt, in Anwesenheit einer Base, um zu ergeben:
(G²)_{b}(G¹)_{3-b}Si-R¹-S-S-S-Hal (XVII)
wobei diese Reaktion in einem Ether bei einer Temperatur von -78 °C bis 50 °C durchgeführt wird;
(2) Reaktion der Verbindung (XVII) mit dem geeigneten Amin der Formel (IX) in Anwesenheit einer Base.

11. Verfahren zur Herstellung der Organosilicium-Verbindungen nach irgendeinem der Ansprüche 4 bis 6, **dadurch gekennzeichnet, daß** in dem Fall, wo x = 4 ist, die genannten Verbindungen erhalten werden, indem man die folgenden Stufen aneinanderreiht:
(1) Reaktion des Disulfid-halogenids der Formel (VIII) oder des Trisulfid-halogenids der Formel (XVII) mit der erforderlichen Menge an elementarem Schwefel [Zufuhr von 2 Atomen Schwefel in dem Fall der Verbindung (VIII) oder Zufuhr von 1 Atom Schwefel in dem Fall der Verbindung (XVII)], indem man bei einer Temperatur arbeitet, die von +70 °C bis +170 °C reicht, gegebenenfalls in Anwesenheit eines aromatischen Lösungsmittels, um die Verbindung der Formel (XVIII) zu ergeben:
**(G**^{**2**}**)**_{**b**}**(G**^{**1**}**)**_{**3-b**}**Si-R**^{**1**}**-S-S-S-S-Hal** (XVIII)
(2) Reaktion der Verbindung (XVIII) mit dem geeigneten Amin der Formel (IX) in Anwesenheit einer Base.

12. Verwendung in einer wirksamen Menge
· (i) von mindestens einer Organosilicium-Verbindung als Träger von Gruppe(n) mit Funktion Polythiosulfenamid der Formel (I), (III) oder (IV) nach irgendeinem der Ansprüche 1 bis 3 oder (2i) insbesondere von mindestens einer funktionellen polysilylierten Organosilicium-Verbindung, die der Formel (V), (VI) oder (VII) entspricht, nach irgendeinem der Ansprüche 4 bis 6,
· als Mittel zur Kopplung weißen Füllstoff-Elastomers,
· in Zusammensetzungen, die mindestens ein dienisches Elastomer und einen weißen Füllstoff als verstärkenden Füllstoff umfassen, wobei diese Zusammensetzungen zur Herstellung von Artikeln aus dienischem(n) Elastomer(en) vorgesehen sind.

13. Zusammensetzungen von dienischem(n) Elastomer(en), umfassend einen weißen verstärkenden Füllstoff, erhalten durch Verwendung einer wirksamen Menge (i) von mindestens einer Organosilicium-Verbindung als Träger von Gruppe(n) mit Funktion Polythiosulfenamid der Formel (I), (III) oder (IV) nach irgendeinem der Ansprüche 1 bis 3 oder (2i) insbesondere von mindestens einer funktionellen polysilylierten Organosilicium-Verbindung, die der Formel (V), (VI) oder (VII) entspricht, nach irgendeinem der Ansprüche 4 bis 6.

14. Zusammensetzungen nach Anspruch 13, **dadurch gekennzeichnet, daß** sie umfassen (die Teile sind in Gewicht angegeben):
· pro 100 Teile von dienischem(n) Elastomer(en),
· 10 bis 200 Teile von weißem, verstärkenden Füllstoff, und
· 1 bis 20 Teile von Kopplungsmittel(n).

15. Zusammensetzungen nach Anspruch 14, **dadurch gekennzeichnet, daß** sie umfassen:
· pro 100 Teile von dienischem(n) Elastomer(en),
· 20 bis 150 Teile von weißem, verstärkenden Füllstoff, und
· 2 bis 20 Teile von Kopplungsmittel(n).

16. Zusammensetzungen nach irgendeinem der Ansprüche 13 bis 15, **dadurch gekennzeichnet, daß** der weiße, verstärkende Füllstoff aus Siliciumdioxid, Aluminiumoxid oder einer Mischung dieser beiden Arten besteht.

17. Zusammensetzungen nach Anspruch 16, **dadurch gekennzeichnet, daß**
· das Siliciumdioxid ein klassisches oder hoch dispergierbares Siliciumdioxid aus der Fällung ist, das eine spezifische Oberfläche BET ≤ 450 m²/g aufweist;
· das Aluminiumoxid ein hoch dispergierbares Aluminiumoxid ist, das eine spezifische Oberfläche BET, die von 30 bis 400 m²/g reicht, und einen hohen Gehalt an reaktiver Funktion der Oberfläche Al-OH aufweist.

18. Zusammensetzungen nach irgendeinem der Ansprüche 13 bis 17, **dadurch gekennzeichnet, daß** das oder die dienische(n) Elastomer(en) ausgewählt wird (werden) unter:
(1) den Homopolymeren, erhalten durch Polymerisation eines konjugierten Dienmonomers mit 4 bis 22 Kohlenstoffatomen;
(2) den Copolymeren, erhalten durch Copolymerisation von mindestens zwei der vorstehend genannten konjugierten Diene untereinander oder durch Copolymerisation von einem oder mehreren der vorstehend genannten konjugierten Diene mit einem oder mehreren ethylenisch ungesättigten Monomeren, ausgewählt unter:
- den aromatischen Vinyl-Monomeren mit 8 bis 20 Kohlenstoffatomen;
- den vinylischen Nitril-Monomeren mit 3 bis 12 Kohlenstoffatomen;
- den Acrylester-Monomeren, abgeleitet von Acrylsäure oder Methacrylsäure mit Alkanolen, mit 1 bis 12 Kohlenstoffatomen;
wobei die Copolymeren zwischen 99 Gew.-% und 20 Gew.-% Dien-Einheiten und zwischen 1 Gew.-% und 80 Gew.-% Einheiten von aromatischem Vinyl, von vinylischem Nitril und/oder von Acrylestern enthalten können;
(3) den ternären Copolymeren, erhalten durch Copolymerisation von Ethylen, von einem α-Olefin mit 3 bis 6 Kohlenstoffatomen, mit einem nicht konjugierten Dien-Monomer mit 6 bis 12 Kohlenstoffatomen;
(4) dem natürlichen Kautschuk;
(5) den Copolymeren, erhalten durch Copolymerisation von Isobuten und Isopren (Butylkautschuk) sowie den halogenierten Versionen dieser Copolymere;
(6) einer Mischung von mehreren der vorstehend unter (1) bis (5) genannten Elastomeren untereinander.

19. Zusammensetzungen nach Anspruch 18, **dadurch gekennzeichnet, daß** man auf ein oder mehrere Elastomer(e) zurückgreift, ausgewählt unter: (1) Polybutadien, Polychloropren, Polyisopren [oder Poly-(2-Methyl-1,3-butadien)]; (2) Poly-(Isopren-butadien), Poly-(Isopren-styrol), Poly-(Isopren-butadien-styrol), Poly-(Butadien-styrol), Poly-(Butadien-acrylnitril); (4) natürlichem Kautschuk; (5) Butylkautschuk; (6) einer Mischung der vorstehend unter (1), (2), (4), (5) genannten Elastomeren untereinander; (6') einer Mischung, die eine in der Überzahl vorliegende Menge (reichend von 51 Gew.-% bis 99,5 Gew.-%) von Polyisopren (1) und/oder von natürlichem Kautschuk (4) und eine in der Minderheit vorliegende Menge (reichend von 49 Gew.-% bis 0,5 Gew.-%) von Polybutadien, Polychloropren, Poly-(Butadien-styrol) und/oder Poly-(Butadien-acrylnitril) enthält.

20. Zusammensetzungen nach irgendeinem der Ansprüche 13 bis 19, **dadurch gekennzeichnet, daß** sie außerdem ganz oder teilweise andere Bestandteile oder Hilfszusatzstoffe enthalten, wie sie üblicherweise auf dem Gebiet der Zusammensetzungen von Elastomer(en) und Kautschuk(s) verwendet werden, wobei diese anderen Bestandteile und Zusatzstoffe umfassen:
· wenn es sich um ein System zur Vulkanisierung handelt:
- Vulkanisierungsmittel, ausgewählt unter Schwefel oder Verbindungen, die Schwefel abgeben;
- Vulkanisierungsbeschleuniger;
- Vulkanisierungsaktivatoren;
· wenn es sich um andere(n) Zusatzstoff(e) handelt:
- einen üblichen verstärkenden Füllstoff, besteht aus Kohlenruß;
- einen wenig oder nicht verstärkenden üblichen weißen Füllstoff;
- Antioxidationsmittel;
- Antiozonierungsmittel;
- Weichmacher und Hilfsstoffe für die Anwendung.

21. Verfahren zur Herstellung der Zusammensetzungen von dienischem(n) Elastomer(en) nach irgendeinem der Ansprüche 13 bis 20, **dadurch gekennzeichnet, daß** man
· in einen üblichen Innenmischer in einer oder in zwei Stufen alle erforderlichen Bestandteile, mit Ausnahme von dem oder den Vulkanisierungsmittel(n) und gegebenenfalls dem oder den Vulkanisierungsbeschleuniger(n) und/oder dem oder den Vulkanisierungsaktivator(en), einträgt und vermischt, wobei man bei einer Temperatur arbeitet, die von +80 °C bis +200 °C reicht,
· anschließend die auf diese Weise erhaltene Mischung in einen externen Mischer einbringt und dann das oder die Vulkanisierungsmittel und gegebenenfalls den oder die Vulkanisierungsbeschleuniger und/oder den oder die Vulkanisierungsaktivator(en) hinzufügt, wobei man bei einer niedrigeren Temperatur von unter +120 °C arbeitet.

22. Artikel aus Elastomer(en), **dadurch gekennzeichnet, daß** sie einen Korpus besitzen, der eine Zusammensetzung nach irgendeinem der Ansprüche 13 bis 20 umfaßt.

23. Artikel nach Anspruch 22, **dadurch gekennzeichnet, daß** sie aus Motorhalterungen, Schuhsohlen, Rollen für Seilbahnen, Dichtungen für Haushaltsgeräte und Kabelumhüllungen bestehen.

## Claims

1. Organosilicon compound comprising, per molecule, linked to silicon atoms, on the one hand, at least one hydroxyl group or a hydrolysable monovalent group, and, on the other hand, a function X capable of reacting with a rubber elastomer, said organosilicon compound being **characterized in that** the function X consists of at least one polythiosulphenamide functional group of formula:
―R¹―Sₓ―NR²R³ (I)
in which:
• the free valency is linked to a silicon atom of the organosilicon compound;
• the symbol R¹ represents a divalent radical chosen from: a saturated or unsaturated aliphatic hydrocarbon-based group; a saturated, unsaturated and/or aromatic, monocyclic or polycyclic carbocyclic group; and a group containing a saturated or unsaturated aliphatic hydrocarbon-based portion and a carbocyclic portion as defined above; said divalent radical being optionally substituted or interrupted with an oxygen atom and/or a nitrogen atom bearing 1 or 2 monovalent groups chosen from: a hydrogen atom; a saturated or unsaturated aliphatic hydrocarbon-based group; a saturated, unsaturated and/or aromatic, monocyclic or polycyclic carbocyclic group; and a group containing a saturated or unsaturated aliphatic hydrocarbon-based portion and a carbocyclic portion as defined above;
• x is an integer or fractional number ranging from 2 to 4;
• one of the substituents of the nitrogen atom, R² or R³, represents: a hydrogen atom; a saturated aliphatic hydrocarbon-based group; a saturated and/or aromatic, monocyclic or polycyclic carbocyclic group; a group containing a saturated aliphatic hydrocarbon-based portion and a saturated and/or aromatic, monocyclic or polycylic carbocyclic portion; or the group of formula:
―Sₐ―R⁴―Si≡ (II)
in which:
• a represents a number equal to 0 or x; when a = x, the symbols x of formulae (I) and (II) may then be identical or different;
• the symbol R⁴ takes any of the meanings given above for R¹, the symbols R¹ and R⁴ possibly being identical or different;
• the symbol Si≡ represents a silicon atom of the organosilicon compound other than the atom to which the free valency of the radical R¹ of formula (I) is linked;
• the other substituent of the nitrogen atom, R³ or R², respectively, represents the group of formula (II) as defined above, with the condition according to which the symbol Si≡ then represents a silicon atom of the organosilicon compound, which, on the one hand, is other than the silicon atom to which the free valency of the radical R¹ of formula (I) is linked, and, on the other hand, is again other than the silicon atom of the other group of formula (II), in the case where the two substituents of the nitrogen atom, R² and R³ each represent a group of formula (II).

2. Organosilicon compound according to Claim 1, **characterized in that** the polythiosulphenamide group corresponds to formula (I) in which at least one of the substituents of the nitrogen atom, R² and R³, has the formula (II) with a = 0, i.e. when it is R³ that has said formula (II) with a = 0, it corresponds to the formula: 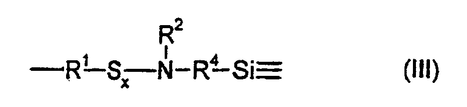
in which:
• R¹ represents: a C₁-C₈ alkylene chain; a saturated C₅-C₁₀ cycloalkylene group; a C₆-C₁₈ arylene group; or a divalent group consisting of a combination of at least two of these radicals;
• x is an integer or fractional number ranging from 2 to 3;
• R² represents: a hydrogen atom; a linear or branched C₁-C₈ alkyl radical; a C₅-C₁₀ cycloalkyl radical; a C₆-C₁₈ aryl radical; a (C₆-C₁₈)aryl (C₁-C₈) alkyl radical; or the group of formula (II) in which a = 0 and R⁴ has the definitions mentioned below in the present claim;
• the symbol R⁴ takes any of the meanings given above for R¹ in the present claim, the symbols R¹ and R⁴ possibly being identical or different.

3. Organosilicon compound according to Claims 1 and 2, **characterized in that** the polythiosulphenamide group corresponds to formula (I) in which only one of the substituents of the nitrogen atom, R² or R³, has the formula (II) with a = x, i.e. it corresponds, when it is R³ that has said formula (II) with a = x, to the formula: 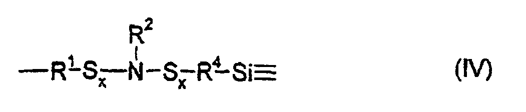
in which the symbols R¹, x, R², and R⁴ take any of the meanings given above in Claim 2, with the additional condition according to which the symbols x of the formula given above may be identical or different.

4. Organosilicon compound according to Claim 1, **characterized in that** it is chosen from functional polysilyl organosilicon compounds bearing a polythiosulphenamide group, corresponding to the general formula:
(G²)_{b}(G¹)_{3-b}Si-R¹-Sₓ-NR²R³ (V)
in which:
• b represents a number chosen from 1, 2 and 3;
• the symbols G¹, which may be identical or different, each represent: a saturated or unsaturated aliphatic hydrocarbon-based group; a saturated, unsaturated and/or aromatic, monocyclic or polycyclic carbocyclic group; or a group containing a saturated or unsaturated aliphatic hydrocarbon-based portion and a carbocyclic portion as defined above;
• the symbols G², which may be identical or different, each represent: a hydroxyl group or a hydrolysable monovalent group;
• R¹, x, R² and R³ take any of the general meanings given above with respect to the formula (I), with the additional condition according to which one of the substituents R² or R³ or both the substituents R² and R³ then represent(s) a silyl group of formula:
-Sₐ-R⁴-Si(G⁴)_{3-b'}(G³)_{b'} (II')
in which:
• a and R⁴ have the general meanings given above with respect to formula (II);
• G³, G⁴ and b' have, respectively, the same meanings as G², G¹ and b given just above in formula (V), the symbols G³, G⁴ and b' possibly being, respectively, identical to or different than the symbols G², G¹ and b.

5. Organosilicon compound according to Claims 4 and 2, **characterized in that** it is chosen from functional polysilyl organisilicon compounds in which, in the polythiosulphenamide group, at least one of the substituents R² and R³ corresponds to the particular formula (II') with a = 0; such compounds, in the case where only one substituent R³ corresponds to the particular formula (II') with a = 0, having the formula: 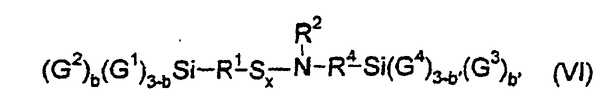
in which:
• R¹, x, R² and R⁴ take any of the meanings given above in Claim 2;
• b represents a number chosen from 1, 2 and 3;
• the symbols G¹, which may be identical or different, each represent: a linear or branched C₁-C₈ alkyl radical; a C₅-C₁₀ cycloalkyl radical or a C₆-C₁₈ aryl radical;
• the symbols G², which may be identical or different, each represent: a linear or branched C₁-C₈ alkoxy radical, optionally substituted with one or more (C₁-C₈) alkoxy groups;
• G³, G⁴ and b' have, respectively, the same broad or specific definitions as G², G¹ and b given just above, the symbols G³, G⁴ and b' possibly being, respectively, identical to or different than the symbols G², G¹ and b.

6. Organosilicon compound according to Claims 4, 5, 2 and 3, **characterized in that** it is chosen from functional polysilyl organosilicon compounds in which, in the polythiosulphenamide group, only one of the substituents R² or R³ corresponds to the particular formula (II') with a = x; such compounds, in the case where it is the substituent R³ that alone corresponds to the particular formula (II') with a = x, having the formula: 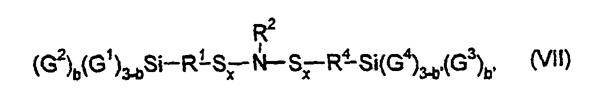 in which R¹, x, R², R⁴, b, G¹, G², G³, G⁴ and b' have, respectively, the same meanings as those given above in formula (VI) of Claim 5, the symbols x possibly being identical or different and the symbols R⁴, G³, G⁴ and b' possibly being, respectively, identical to or different than the symbols R¹, G², G¹ and b.

7. Process for preparing the organosilicon compounds according to any one of Claims 4 to 6, **characterized in that**, when x = 2, said compounds are obtained by reacting a disulphide halide of formula:
(G²)_{b}(G¹)_{3-b}Si-R¹-S-S-Hal (VIII)
in which G², G¹, b and R¹ are as defined above and Hal represents a halogen atom, with the appropriate amine of formula:
HNR²R³ (IX)
in which R² and R³ are as defined above, in the presence of a base.

8. Process for preparing the organosilicon compounds according to any one of Claims 4 to 6, **characterized in that**, when x = 2, said compounds are obtained by reacting a disulphide of formula:
(G²)_{b}(G¹)_{3-b}Si-R¹-S-S-J (X)
in which G², G¹, b and R¹ are as defined above and J represents an optionally substituted succinimido or phthalimido group, with the amine HNR²R³ (IX) defined above, in the presence of a base.

9. Process for preparing the organosilicon compounds according to any one of Claims 4 to 6, **characterized in that**, when x = 2, said compounds are obtained by reacting an amino sulphide of formula:
J-S-NR²R³ (XI)
in which R², R³ and J are as defined above, with a thiol of formula:
(G²)_{b}(G¹)_{3-b}Si-R¹-SH (XII)
in which G², G¹, b and R¹ are as defined above, in the presence of a base.

10. Process for preparing the organosilicon compounds according to any one of Claims 4 to 6, **characterized in that**, when x = 3, said compounds are obtained by performing the following sequence of steps:
(1) reaction of the thiol of formula (XII) with S₂(Hal)₂ in which Hal represents a halogen atom, in the presence of a base, to give:
(G²)_{b}(G¹)_{3-b}Si-R¹-S-S-S-Hal (XVII)
this reaction being performed in an ether at a temperature of from -78 to -50°C;
(2) reaction of compound (XVII) with the appropriate amine of formula (IX) in the presence of a base.

11. Process for preparing the organosilicon compounds according to any one of Claims 4 to 6, **characterized in that**, when x = 4, said compounds are obtained by performing the following sequence of steps:
(1) reaction of a disulphide halide of formula (VIII) or of the trisulphide halide of formula (XVII) with the required amount of elementary sulphur [provision of 2 sulphur atoms in the case of compound (VIII) or provision of one sulphur atom in the case of compound (XVII)], working at a temperature ranging from +70°C to +170°C, optionally in the presence of an aromatic solvent, to give the compound of formula:
(G²)_{b}(G¹)_{3-b}Si-R¹-S-S-S-S-Hal (XVIII)
(2) reaction of the compound of formula (XVIII) with the appropriate amine of formula (IX) in the presence of a base.

12. Use of an effective amount:
• (i) of at least one organosilicon compound bearing group(s) containing a polythiosulphenamide function of formula (I), (III) or (IV) according to any one of Claims 1 to 3, or (2i), in particular, of at least one functional polysilyl organosilicon compound corresponding to formula (V), (VI) or (VII) according to any one of Claims 4 to 6,
• as a white filler-elastomer coupling agent,
• in compounds comprising at least one diene elastomer and a white filler as reinforcing filler, these compounds being intended for manufacturing articles made from diene elastomer(s).

13. Diene elastomer compound comprising a reinforcing white filler, obtained by using an effective amount (i) of at least one organosilicon compound bearing group(s) containing a polythiosulphenamide function of formula (I), (III) or (IV) according to any one of Claims 1 to 3, or (2i), in particular, of at least one functional polysilyl organosilicon compound corresponding to the formula (V), (VI) or (VII) according to any one of Claims 4 to 6.

14. Compound according to Claim 13, **characterized in that** it comprises (the parts are given on a weight basis):
• per 100 parts of diene elastomer(s),
• 10 to 200 parts of reinforcing white filler, and
• 1 to 20 parts of coupling agent(s).

15. Compound according to Claim 14, **characterized in that** it comprises:
• per 100 parts of diene elastomer(s),
• 20 to 150 parts of reinforcing white filler, and
• 2 to 20 parts of coupling agent(s).

16. Compound according to any one of Claims 13 to 15, **characterized in that** the reinforcing white filler consists of silica, alumina or a mixture of these two species.

17. Compound according to Claim 16, **characterized in that**:
• the silica is a standard or highly dispersible precipitation silica with a BET specific surface area ≤ 450 m²/g:
• the alumina is a highly dispersible alumina with a BET specific surface area ranging from 30 to 400 m²/g and a high content of Al-OH reactive surface functions.

18. Compound according to any one of Claims 13 to 17, **characterized in that** the diene elastomer(s) is (are) chosen from:
(1) homopolymers obtained by polymerization of a conjugated diene monomer containing from 4 to 22 carbon atoms;
(2) copolymers obtained by copolymerization of at least two of the abovementioned conjugated dienes with each other or by copolymerization of one or more of the abovementioned conjugated dienes with one or more ethylenically unsaturated monomers chosen from:
- vinylaromatic monomers containing from 8 to 20 carbon atoms;
- vinyl nitrile monomers containing from 3 to 12 carbon atoms;
- acrylic ester monomers derived from acrylic acid or from methacrylic acid with alkanols containing from 1 to 12 carbon atoms;
the copolymers may contain between 99% and 20% by weight of diene units and between 1% and 80% by weight of vinylaromatic, vinyl nitrile and/or acrylic ester units;
(3) ternary copolymers obtained by copolymerization of ethylene or of an α-olefin containing 3 to 6 carbon atoms with a nonconjugated diene monomer containing from 6 to 12 carbon atoms;
(4) natural rubber;
(5) copolymers obtained by copolymerization of isobutene and isoprene (butyl rubber), and also the halogenated versions of these copolymers;
(6) a blend of several of the abovementioned elastomers (1) to (5) with each other.

19. Compound according to Claim 18, **characterized in that** use is made of one or more elastomer(s) chosen from: (1) polybutadiene, polychloroprene or polyisoprene [or poly(2-methyl-1,3-butadiene)]; (2) poly(isoprene-butadiene), poly(isoprene-styrene), poly(isoprene-butadiene-styrene), poly(butadienestyrene) or poly(butadiene-acrylonitrile); (4) natural rubber; (5) butyl rubber; (6) a blend of elastomers, especially the abovementioned elastomers (1), (2), (4) and (5) with each other; (6') a blend containing a majority amount (ranging from 51% to 99.5% by weight) of polyisoprene (1) and/or of natural rubber (4) and a minority amount (ranging from 49% to 0.5% by weight) of polybutadiene, polychloroprene, paly(butadiene-styrene) and/or poly(butadiene-acrylonitrile).

20. Compound according to any one of Claims 13 to 19, **characterized in that** it also contains all or some of the other auxiliary constituents and additives usually used in elastomer and rubber compounds, said other constituents and additives comprising:
• when it is a vulcanization system:
- vulcanizing agents chosen from sulphur and sulphur-donating compounds;
- vulcanization accelerators;
- vulcanization activators;
• when it is another additive (or additives):
- a conventional reinforcing filler consisting of carbon black;
- a conventional white filler with little or no reinforcing nature;
- antioxidants;
- antiozonizers;
- plasticizers and processing agents.

21. Process for preparing the diene elastomer compounds according to any one of Claims 13 to 20, **characterized in that**:
• all the required constituents with the exception of the vulcanizing agent(s) and optionally: of the vulcanization accelerator(s) and/or of the vulcanization activator(s), are introduced into and blended in a standard internal mixer, in one or two steps, working at a temperature ranging from +80°C to +200°C;
• the blend thus obtained is then taken up in an external mixer and the vulcanizing agent(s) and optionally: the vulcanization accelerator(s) and/or the vulcanization activator(s) is (are) then added thereto, working at a lower temperature, below +120°C.

22. Elastomer article, **characterized in that** it has a body comprising a compound according to any one of Claims 13 to 20.

23. Article according to Claim 22, **characterized in that** it consists of engine blocks, shoe soles, rollers for cable cars, seals for household electrical appliances and cable sheaths.
